(19) **Europäisches Patentamt**

**European Patent Office**

**Office européen des brevets**

(11) **EP 0 802 427 B1**

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(51) Int Cl.$^7$: **G01S 13/28**, G01S 7/40

(21) Anmeldenummer: **97106431.6**

(22) Anmeldetag: **18.04.1997**

(54) **Verfahren zum aufwandgünstigen Bestimmen einer Impulsantwort eines hochauflösenden bandbegrenzten Radarkanals**

Process for determining the impulse response of a band-limited high resolution radar channel in an economically favourable way

Procédé à coût réduit pour la détermination de la réponse impulsionelle d'un canal radar à bande limitée et haute résolution

(84) Benannte Vertragsstaaten:
**ES FR GB IT NL SE**

(30) Priorität: **18.04.1996 DE 19615353**

(43) Veröffentlichungstag der Anmeldung:
**22.10.1997 Patentblatt 1997/43**

(73) Patentinhaber: **Deutsches Zentrum für Luft- und Raumfahrt e.V.**
**53175 Bonn (DE)**

(72) Erfinder:
• **Schroth, Arno, Prof. Dr.**
**82178 Puchheim (DE)**
• **Felhauer, Tobias, Dr.**
**89223 Neu-Ulm (DE)**
• **Baier, Walter, Prof. Dr.**
**67661 Kaiserslautern (DE)**

(74) Vertreter: **von Kirschbaum, Albrecht, Dipl.-Ing.**
**Patentanwalt, Bahnhofplatz 2**
**82110 Germering (DE)**

(56) Entgegenhaltungen:
**DE-A- 4 231 311          DE-A- 4 329 320**

• **FELHAUER, TOBIAS: "Optimale erwartungtreue Algorithmen zur hochauflösenden Kanalschätzung mit Bandspreizsignalformen" FORTSCHRITT BERICHTE DER VDI ZEITSCHRIFTEN REIHE 10 NR.278. DÜSSELDORF: 1994 , Seiten 42-65, XP002067055**
• **WHALEN A D: "Detection of signals in noise" 1971, LONDON, UK, ACADEMIC, UK, XP002067056**
• **FELHAUER T ET AL: "DIE OPTIMALSCHAETZUNG ALS VORTEILHAFTE ALTERNATIVE ZUR KORRELATION IN RADARSYSTEMEN MIT EXPANDIERTEN IMPULSEN" ARCHIV FUR ELEKTRONIK UND UBERTRAGUNGSTECHNIK, Bd. 46, Nr. 1, 1.Januar 1992, Seiten 32-37, XP000311040**

**Beschreibung**

Die Erfindung betrifft ein Verfahren zum aufwandgünstigen Bestimmen einer Impulsantwort eines hochauflösenden bandbegrenzten Radarkanals gemäß dem Oberbegriff des Anspruchs 1.

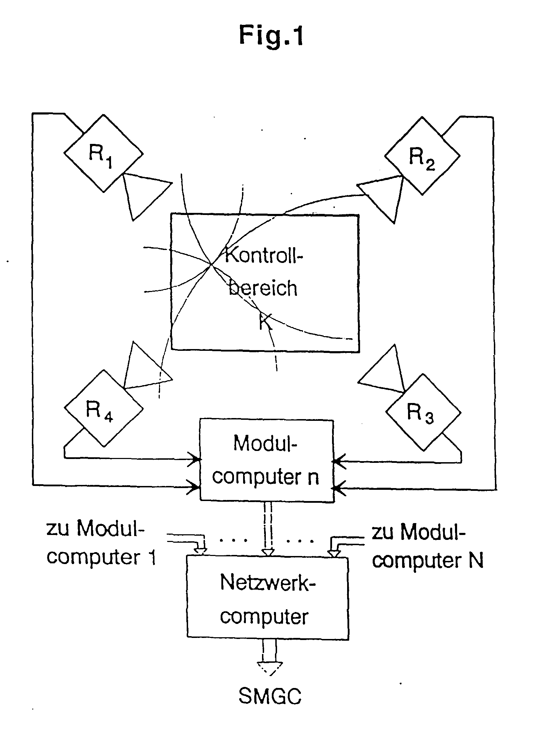

In DE 41 43 215 A1 ist ein Nahbereichs-Radar-(NR)-Netz beschrieben, das ein nichtkooperatives, modular aufgebautes Ortungssystem mit einer in Fig.1 dargestellten prinzipiellen Systemstruktur ist. In Fig.1 weist das NR-Netz N Module auf, die wiederum aus jeweils vier Radarstationen $R_i$ (i=1...4) aufgebaut sind. In den einzelnen Radarstationen befinden sich feststehende, d.h. nichtrotierende Antennen, die so installiert sind, daß Reflexionen und Abschattungen an Gebäuden minimal sind. Die feststehenden Antennen, die gemeinsam einen zu überwachenden Kontrollbereich K ausleuchten, haben einen extrem großen, horizontalen Öffnungswinkel.

Um bei einer geringen Sendeleistung von ca. 1W gleichzeitig eine Reichweite von bis zu 1,5 km und eine Entfernungsauflösung von 2 bis 3m zu erreichen, werden Impuls-Kompressionssignale, d.h. zeitlich expandierte Impulse verwendet, die aufgrund einer differenzierten Feinstruktur ein Zeit-Bandbreite-Produkt sehr viel größer als Eins haben. Durch die Verwendung von starren Antennen und einer geringen Sendeleistung ist dann eine wartungsarme und kostengünstige Realisierung der einzelnen Radarstationen $R_i$ ermöglicht.

Damit sich die einzelnen Radarstationen $R_i$ eines Moduls bzw. die Radarstationen verschiedener Module nicht gegenseitig stören, senden die einzelnen Radarstationen des gesamten NR-Netzes zeitdisjunkt. Weiterhin senden alle Radarstationen im gleichen Frequenzband, vorzugsweise im X-Band, mit einer Meßwiederholfrequenz von 100 Hz. Die Meßdaten der einzelnen Meßstationen $R_i$ werden von einem Modulcomputer gesammelt und weiterverarbeitet.

Der Modulcomputer berechnet aus eindimensionalen Echoprofilen, die von den einzelnen Radarstationen gemessen werden, die Positionen von bewegten Objekten im zu überwachenden Kontrollbereich. Da nur radiale Entfernungen gemessen werden, folgt der Ort eines Objekts aus dem Schnittpunkt sich schneidender Kreisbögen um die Radarstationen $R_i$ herum (siehe Fig. 1).

Um auch größere Flughafenbereiche überwachen zu können, werden mehrere Module eingesetzt, deren Modulcomputer wiederum mit einem zentralen Netzwerkcomputer verbunden sind. Der Netzwerkcomputer steuert, koordiniert und synchronisiert die einzelnen Module und sammelt die anfallenden Daten, um sie an das übergeordnete SMGC-(Surface Movement Guidance and Control) Planungssystem weiterzuleiten.

Da mit dem in DE 41 43 215 A1 beschriebenen NR-Netz auch kleinere Objekte neben sehr großen Objekten nachweisbar sein müssen, ist eine Relativdynamik innerhalb eines Echoprofils von 50 dB erforderlich; eine solche Dynamik ist jedoch mit binärphasen-codierten expandierten Sendeimpulsen mit einem Zeit-Bandbreite-Produkt von maximal 64 im Sender und signalangepaßter Filterung im Empfänger aufgrund unvermeidbarer Korrelationsnebenmaxima nicht erreichbar. In dem beim NR-Netz bisher verfolgten Konzept der empfängerseiten Signalverarbeitung ist die Anmelderin von komplementären Binärcodes ausgegangen, die im Empfänger mit einem signalangepaßten Filtersystem verarbeitet werden.

Hierbei wird die besondere Korrelationseigenschaft komplementärer Codes ausgenutzt; denn komplementäre Codes sind Code-Paare, die derart konstruiert sind, daß sich bei paarweiser linearer Addition der Autokorrelationsfunktionen die Korrelationsnebenmaxima gegenseitig auslöschen. In einem realen System werden die einzelnen Codes, die ein komplementäres Code-Paar bilden, nacheinander übertragen und im Empfänger entsprechenden, signalangepaßten Filtern zugeführt. Durch phasenrichtige lineare Addition der Signale am Ausgang der signalangepaßten Filter kann dann die gewünschte Kompensation von Nebenmaxima erreicht werden.

In realen Systemen ergeben sich bei Empfängern, die mit signalangepaßter Filterung arbeiten, jedoch bekanntlich dann Schwierigkeiten, wenn zum einen, wie in einem Radarsystem, die Anfangsphasen der Echosignale im Empfänger nicht exakt bekannt sind, und zum anderen Dopplerverschiebungen auftreten. In diesen Fällen stellt sich eine Kompensation von Nebenmaxima nicht in einem für diese Anwendung ausreichenden Maße ein.

Als Alternative zu dem bisher verfolgten Empfängerkonzept wird nunmehr ein Empfängerkonzept beschrieben, das in seinem Grundprinzip an sich bekannt ist (siehe: T.Felhauer, P. Voigt, P.W. Baier und A. Mämmelä "Die Optimalschätzung als vorteilhafte Alternative zur Korrelation in Radarsystemen mit expandierten Impulsen", Zeitschrift "AEÜ", Vol.46 (1992), No.1, Stn. 32 - 38), jedoch unter Berücksichtigung der speziellen Randbedingungen für die betrachtete Anwendung in modifizierter Form sehr aufwandgünstig und effizient implementiert werden kann. Im folgenden wird zunächst das Grundprinzip dieses Empfängerkonzepts beschrieben.

Zunächst werden bezüglich der prinzipiellen Struktur einer Radarstation $R_i$ (i = 1, ...., 4) (siehe Fig.1 ) nur diejenigen Systemkomponenten beschrieben, die für Algorithmen zur optimalen, erwartungstreuen empfängerseitigen Signalverarbeitung relevant sind; hierbei werden Bandpaßsignale $S_{BP}(t)$, deren Bandbreite sehr viel kleiner als die Trägerfrequenz $f_0$ ist, durch ihr komplexes Tiefpaßäquivalent $\underline{s}_{TP}(t)$ dargestellt,

$$s_{BP}(t) = \mathrm{Re}\,[\underline{s}_{TP}(t)e^{j2\pi f_o t}]. \qquad (1)$$

Komplexe Größen sind durch Unterstreichen gekennzeichnet, während Matrizen und Vektoren in Fettdruck dargestellt sind. Die Symbole $(.)^*$ und $(.)^T$ bedeuten konjugiert komplex bzw. transponiert.

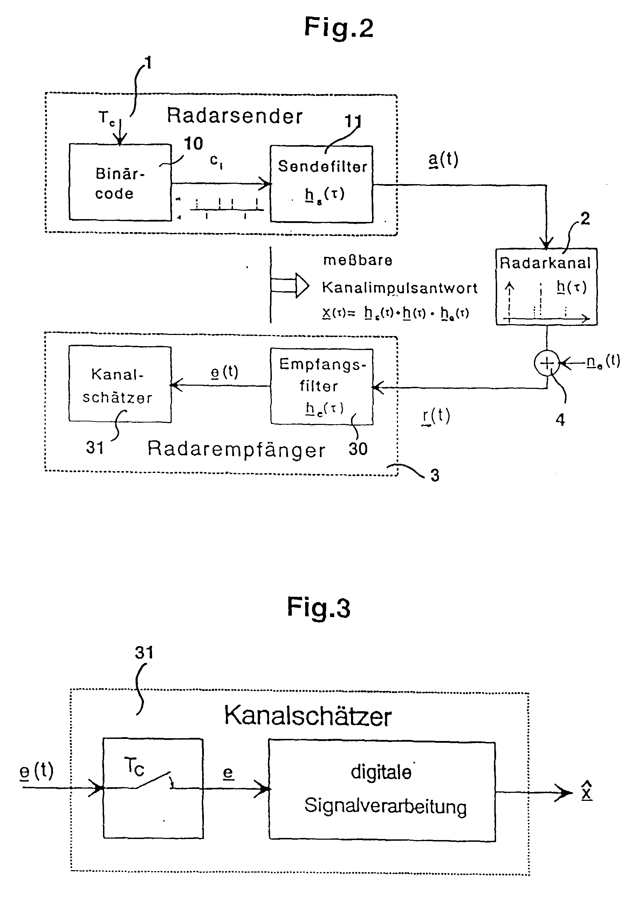

Fig.2 zeigt prinzipiell ein solches System, das aus Radarsender 1, Radarkanal 2, einem Addierglied 4 zum Einspeisen eines Störsignals und Radarempfänger 3 besteht. Im Radarsender wird ein binärphasen-codierter expandierter Sendeimpuls digital erzeugt, indem die binären Codeelemente $c_i \in [-1,+1]$ des Binärcodes

$$\underline{c} = (\underline{c}_1, \underline{c}_2, ..... \underline{c}_N)^T \qquad (2)$$

der Länge N im zeitlichen Abstand $T_c$ (Chipdauer) aus einem digitalen Speicher 10 ausgelesen und einem Sendefilter 11 mit der Impulsantwort $\underline{h}_s(\tau)$ zugeführt werden. Der analoge, binärphasen-codierte expandierte Sendeimpuls

$$\underline{a}(t) = \sum_{k=1}^{N} c_k\,\underline{h}_S(t - kT_c) \qquad (3)$$

gelangt anschließend auf den Radarkanal 2, welcher durch den freien Raum zwischen Senderausgang und Empfängereingang und die darin vorhandenen zurückstreuenden Objekte gebildet ist. Das Übertragungsverhalten des Radarkanals 2 läßt sich vollständig durch seine Kanalimpulsantwort $\underline{h}(\tau)$ beschreiben. Das Signal

$$\underline{r}(t) = \int_{-\infty}^{+\infty} \underline{a}(t-\tau)\,\underline{h}(\tau)\,d\tau \; + \; \underline{n}_e(t) \qquad (4)$$

am Empfängereingang, dem additives Rauschen $\underline{n}_e(t)$ überlagert ist, wird einem Empfangsfilter 30 mit der Impulsantwort $\underline{h}_e(\tau)$ zugeführt. Mit

$$\underline{x}(\tau) = \underline{h}_s(\tau) * \underline{h}(\tau) * \underline{h}_e(\tau) \qquad (5)$$

und

$$\underline{n}(t) = \underline{n}_e(t) * \underline{h}_e(\tau), \qquad (6)$$

wobei das Symbol "*" Faltung bedeutet, berechnet sich das Signal $\underline{e}(t)$ am Eingang eines Kanalschätzers 31 nach Fig. 1 gemäß Gl.(7):

$$\underline{e}(t) = \sum_{i=1}^{N} c_i \cdot \underline{x}(t - iT_c) \; + \; \underline{n}(t). \qquad (7)$$

Mittels des Kanalschätzers 31 in Fig.2 läßt sich aus dem Empfangssignal $\underline{e}(t)$ nach Gl.(7) und durch Nutzung jeglicher Art von a-priori Wissen eine möglichst genaue Schätzung der Impulsantwort des Radarkanals 2 ermitteln. Da die Radarkanal-Impulsantwort durch die im Radarkanal vorhandenen reflektierenden Objekte bestimmt ist, können durch Interpretieren der geschätzen Radarkanal-Impulsantwort die in einem Radarsystem angestrebten Informationen über Ort, Geschwindigkeit und Art der reflektierenden Objekte im Radarkanal 2 ermittelt werden.

Mit einem Radarsystem kann jedoch prinzipiell nur eine Schätzung $\underline{x}(\tau)$ einer im folgenden als meßbare Ka-

nalimpulsantwort bezeichneten Funktion $\underline{x}(\tau)$ nach Gl.(5) bestimmt werden. Unabhängig von der Wahl der empfängerseitigen Signalverarbeitung im Kanalschätzer 31 müssen somit Sendefilter 11 und Empfangsfilter 30 entsprechend gewählt werden, damit Informationen über die reflektierenden Objekte im Radarkanal 2 aus der meßbaren Kanalimpulsantwort $\underline{x}(\tau)$ auf einfache Weise gewonnen werden können.

In einem Kanalschätzer 31 mit digitaler Signalverarbeitung nach Fig.3 wird das Empfangssignal $\underline{e}(t)$ nach Gl. (7) abgetastet. Da nur M Entfernungstore von Interesse sind, wird die meßbare Kanalimpulsantwort nur innerhalb eines Zeitintervalls

$$0 \leq \tau \leq (M\text{-}1)\, T_c \tag{8}$$

ausgewertet.

Für einen expandierten Sendeimpuls $\underline{a}(t)$ nach Gl.(3) der Dauer $NT_c$ wird das Empfangssignal $\underline{e}(t)$ nur innerhalb des Zeitintervalls

$$0 \leq t \leq (M\text{+}N\text{-}1)T_c \tag{9}$$

vom relevanten Bereich der meßbaren Kanalimpulsantwort $\underline{x}(\tau)$ nach Gl.(8) beeinflußt.

Mit einem Vektor

$$\underline{n} = (\underline{n}_1,\, \underline{n}_2,...,\, \underline{n}_{M+N-1})^T \tag{10}$$

der Abtastwerte $\underline{n}_i$ des Rauschens $\underline{n}(t)$, das dem Empfangssignal $\underline{e}(t)$ nach Gl.(7) im Zeitintervall Gl.(9) additiv überlagert ist, und dem Vektor

$$\underline{x} = (\underline{x}_1,\, \underline{x}_2,...,\underline{x}_M)^T \tag{11}$$

der Abtastwerte der meßbaren Kanalimpulsantwort $\underline{x}(\tau)$ nach Gl.(5) im Zeitintervall nach Gl.(8), folgt für die Abtastwerte $\underline{e}_i$ des Empfangssignals $\underline{e}(t)$ nach Gl.(7) innerhalb des Zeitintervalls nach Gl.(9)

$$\underline{e} = \begin{bmatrix} \underline{e}_1 \\ \underline{e}_2 \\ \cdot \\ \cdot \\ \cdot \\ \underline{e}_{M+N-1} \end{bmatrix} = \begin{bmatrix} \underline{c}_1 & 0 & \cdot & \cdot & \cdot & 0 \\ \underline{c}_2 & \underline{c}_1 & \cdot & & & \cdot \\ \cdot & \underline{c}_2 & \cdot & & 0 \\ \underline{c}_N & \cdot & \cdot & & \underline{c}_1 \\ 0 & \underline{c}_N & & & \underline{c}_2 \\ \cdot & & \cdot & & \cdot \\ 0 & \cdot & \cdot & \cdot & 0 & \underline{c}_N \end{bmatrix} \cdot \begin{bmatrix} \underline{x}_1 \\ \underline{x}_2 \\ \cdot \\ \cdot \\ \cdot \\ \underline{x}_M \end{bmatrix} + \begin{bmatrix} \underline{n}_1 \\ \underline{n}_2 \\ \cdot \\ \cdot \\ \cdot \\ \underline{n}_{M+N-1} \end{bmatrix} = \underline{\mathbf{Ax}} + \underline{n} \tag{12}$$

Gemäß Gl.(12) können daher mit einem Kanalschätzer 31 mit digitaler Signalverarbeitung prinzipiell nur Abtastwerte $\underline{x}_i$ der meßbaren Kanalimpulsantwort $\underline{x}(\tau)$ bestimmt werden. Eine unabhängig von der Art der empfängerseitigen Signalverarbeitung zum Kanalschätzen notwendige Voraussetzung für eine Relativdynamik von 40 bis 50 dB hängt somit von der Wahl von Sende- und Empfangsfilter 11 bzw. 30 ab.

Zur Vereinfachung werden im folgenden der im Sender 1 abgespeicherte Binärcode c nach Gl.(2) als expandierter Sendeimpuls, der Vektor $\underline{x}$ nach Gl.(11) als Kanalimpulsantwort und dessen Komponenten $\underline{x}_i$ mit (i=1...M) als potentielle Reflektivitäten, der Vektor $\underline{n}$ nach Gl.(10) als additives Rauschen und der Vektor $\underline{e}$ nach Gl.(12) als Empfangssignal bezeichnet.

Das weitgehend angewandte Prinzip der digitalen, empfängerseitigen Signalverarbeitung von expandierten Impulsen ist die Korrelation auf Basis der signalangepaßten Filterung. Bei dieser Art der empfängerseitigen Signal-

verarbeitung wird das Empfangssignal $\underline{e}$ nach Gl.(12) mit dem zeitinversen und konjugiert komplexen expandierten Sendeimpuls $\underline{c}$ nach Gl.(2) korreliert. Mit der hier verwendeten Matrix-Vektor-Notation wird die Schätzung $\underline{\hat{x}}_{MF}$ der Kanalimpulsantwort $\underline{x}$ am Ausgang eines signalangepaßten Filters (Matched Filter) erhalten, indem das Empfangssignal $\underline{e}$ nach Gl.(12) mit der Matrix $\underline{A}^{*T}$ multipliziert wird, d.h.

$$\underline{\hat{x}}_{MF} = \underline{A}^{*T} \underline{e} = \underline{A}^{*T} \underline{A}\, \underline{x} + \underline{A}^{*T} \underline{n}. \tag{13}$$

Gelangt ein expandierter Sendeimpuls auf ein signalangepaßtes Filter, so wird an dessen Ausgang die Autokorrelationsfunktion des Sendeimpulses erhalten, die aus der Korrelationshauptspitze, die auch als komprimierter Impuls bezeichnet wird, und aus kleineren Korrelationsnebenmaxima besteht.

Wird die signalangepaßte Filterung jedoch bei einem Mehrwege-Szenario angewendet, bei dem eng benachbarte Ziele mit stark unterschiedlichen Rückstreuquerschnitten auftreten können, so sind die bei signalangepaßter Filterung unvermeidbaren Korrelationsnebenmaxima am Filterausgang sehr störend, da sie Korrelationshauptspitzen aufgrund kleinerer Ziele maskieren ($\rightarrow$ Entdeckungsverlust) oder Korrelationshauptspitzen von nicht vorhandenen Zielen vortäuschen ($\rightarrow$ Falschalarm) können.

Das auch bei Verwendung spezieller expandierter Impulse bei signalangepaßter Filterung offene Problem von Nebenmaxima ist mit Hilfe erwartungstreuer Schätzalgorithmen prinzipiell lösbar, da bei Schätzalgorithmen aufgrund der Erwartungstreue systematische Schätzfehler, die mit den Korrelationsnebenmaxima vergleichbar sind, von vorneherein vermieden werden.

Für eine optimale, erwartungstreue Schätzmatrix $\underline{\hat{x}}_{OS}$ wird das Empfangssignal $\underline{e}$ nach Gl. (12) mit der Schätzmatrix $\underline{S}$ gleich $(\underline{A}^{*T}\underline{A})^{-1}\underline{A}^{*T}$ multipliziert, d.h.

$$\underline{\hat{x}}_{OS} = \underline{S}\, \underline{e} = (\underline{A}^{*\,T}\, \underline{A})^{-1}\, \underline{A}^{*\,T} \underline{e} = \underline{x} + (\underline{A}^{*\,T}\, \underline{A})^{-1}\, \underline{A}^{*T} \underline{n}. \tag{14}$$

Aufgrund der Erwartungstreue ist die Schätzung $\underline{\hat{x}}_{OS}$ nach Gl.(14) im Gegensatz zur Schätzung $\underline{\hat{x}}_{MF}$ nach Gl. (13) bis auf den additiven Rauschanteil I $(\underline{A}^{*T}\underline{A})^{-1}\underline{A}^{*T}\underline{n}$ gleich der wahren Kanalimpulsantwort $\underline{x}$. Die Kanalschätzung $\underline{\hat{x}}_{OS}$ nach Gl.(14) ist weiterhin eine optimale erwartungstreue Kanalschätzung, da sie

- bei unkorreliertem Rauschen $\underline{n}$ diejenige Kanalschätzung ist, bei der die Varianzen $E[|\underline{\hat{x}}_{OSi}-\underline{x}_i|^2]$ der erwartungstreuen Schätzwerte $\underline{x}_{OSi}$ minimal sind,
- bei weißem Gaußrauschen die Likelihood Funktion $p(\underline{e}|\underline{x})$ maximiert und
- nach Filterung mit dem im Empfänger bekannten expandierten Sendeimpuls $\underline{c}$ nach Gl.(2) das Empfangssignal $\underline{e}$ nach Gl.(12) im Sinne kleinster Fehlerquadrate approximiert.

Ein optimaler erwartungstreuer Kanalschätzer ist nach Gl.(14) vollständig durch die Schätzmatrix $\underline{S}$ charakterisiert. Obwohl die betragsmäßig größten Matrixelemente $S_{ij}$ typischerweise in einem Band der Breite N um die Hauptdiagonale der Schätzmatrix $\underline{S}$ konzentriert sind, dürfen bei einer Dynamikforderung von 40 bis 50 dB die betragsmäßig kleinen Matrixelemente $S_{ij}$ außerhalb dieses Bandes nicht vernachlässigt werden.

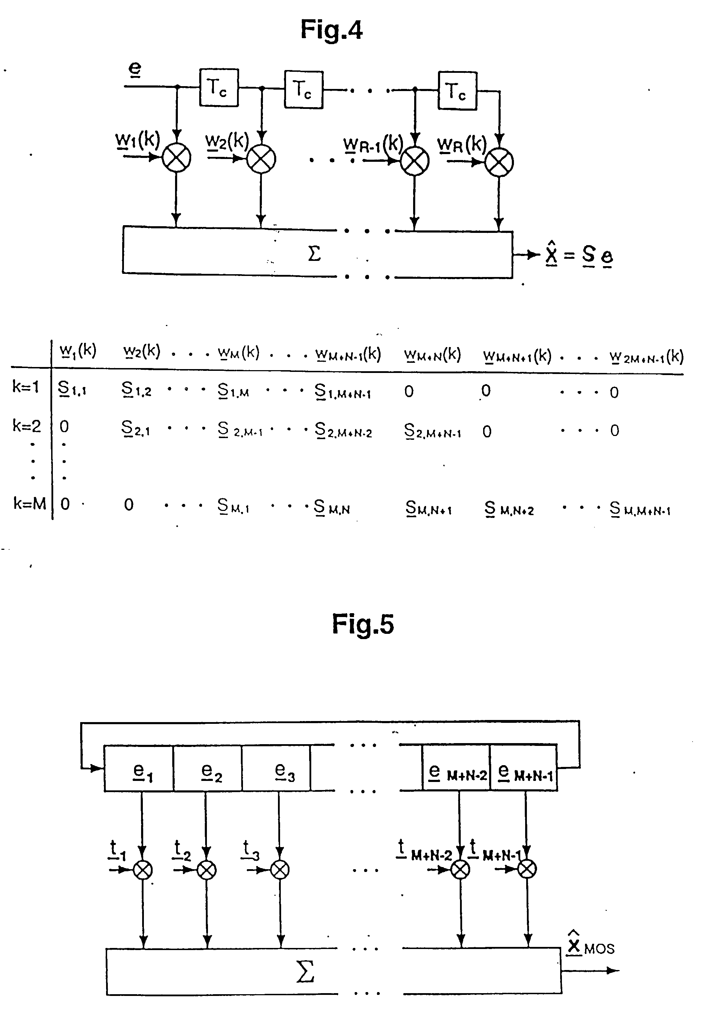

Die bei optimaler erwartungstreuer Kanalschätzung zu berechnende Multiplikation $\underline{S}\,\underline{e}$ des Empfangssignals $\underline{e}$ nach Gl.(12) mit der voll besetzten Schätzmatrix $\underline{S}$ nach Gl.(14) kann, wie in Fig.4 gezeigt, durch Filtern des Empfangssignals $\underline{e}$ nach Gl.(12) mit einem digitalen Korrelator mit R gleich 2M+N-1 zeitvarianten Filterkoeffizienten $\underline{w}_i(k)$ berechnet werden (i = 1, 2 , ..., 2M + N - 1; k = 1 ....M).

Nach Gl.(12) und Gl.(14) ist die Schätzmatrix $\underline{S}$ eines optimalen erwartungstreuen Kanalschätzers ausschließlich durch den expandierten Sendeimpuls $\underline{c}$ nach Gl.(2) bestimmt. Da der expandierte Sendeimpuls $\underline{c}$ im Empfänger 3 bekannt ist, kann die Schätzmatrix $\underline{S}$ theoretisch a-priori offline berechnet und im Empfänger 3 abgespeichert werden.

Zur Bestimmung des effektiv gesendeten Impulses werden in relativ kurzen Zeitabständen Kalibrierungsmessungen durchgeführt. Folglich ist in der Praxis auch die Schätzmatrix $\underline{S}$ in relativ kurzen Zeitabständen neu zu erstellen. Die bei dem Erstellen der Schätzmatrix nach Gl.(14) auszuführende Inversion der Matrix $\underline{A}^{*T}\underline{A}$ ist jedoch auch bei Anwendung aufwandsgünstiger Verfahren sehr rechenintensiv.

Aufgabe der Erfindung ist es daher, ein Verfahren zur weiterhin erwartungstreuen hochauflösenden Kanalschätzung für Radarstationen eines modularen Nahbereichs-Radar-(NR-)Netzes mit Bandspreizsignalen bzw. expandierten Impulsen zu schaffen, das zwar prinzipiell auf der optimalen erwartungstreuen Kanalschätzung beruht, aufgrund spezieller Randbedingungen, z.B. beim NR-Netz, jedoch in etwas modifizierter Form und mit speziell optimierten Sendeimpulsen besonders aufwandgünstig implementiert werden kann.

Diese Aufgabe wird bei einem Verfahren gemäß dem Oberbegriff des Anspruchs 1 durch die in dessen kennzeichnenden Teil angegebenen Merkmale gelöst. Vorteilhafte Weiterbildungen sind Gegenstand der unmittelbar oder mittelbar auf den Anspruch 1 rückbezogenen Ansprüche 2 bis 13.

Durch das Verwenden einer modifizierten, erwartungstreuen Optimalschätzung ist somit gemäß der Erfindung durch eine weitaus aufwandgünstiger zu berechnende Schätzmatrix eine kostengünstige Realisierung einer digitalen Signalverarbeitung z.B. in einem NR-Netz geschaffen, die den strengen Echtzeitbedingungen gerecht wird. Somit ist auch hinsichtlich der Signalprozessierung ein optimales Verfahren zum Bestimmen einer Impulsantwort eines Radarkanals mit hoher Auflösung in den Radarstationen z.B. eines modularen NR-Netzes geschaffen.

Nachfolgend wird die Erfindung anhand von bevorzugten Ausführungsformen unter Bezugnahme auf die Zeichnungen im einzelnen beschrieben. Es zeigen:

| | |
|---|---|
| Fig.1 | eine prinzipielle Struktur eines bereits erläuterten Nahbereichs-Radar-Netzes; |
| Fig.2 | eine schematische Darstellung eines bereits beschriebenen bekannten Modells einer Radarstation $R_i$; |
| Fig.3 | ein Blockschaltbild eines ebenfalls bereits beschriebenen Kanalschätzers mit digitaler Signalverarbeitung; |
| Fig.4 | ein Blockschaltbild eines bekannten, bereits beschriebenen, digitalen Korrelators zum Implementieren einer optimalen erwartungstreuen Kanalschätzung; |
| Fig.5 | ein Blockschaltbild einer bevorzugten Ausführungsform eines zyklischen Korrelators zum Implementieren einer modifizierten, erwartungstreuen Kanalschätzung gemäß der Erfindung, und |
| Fig.6 | in Form eines Blockschaltbilds eine Implementierung der modifizierten, erwartungstreuen Kanalschätzung gemäß der Erfindung. |
| Fig.7(a) und (b) | Graphen, wobei auf der Ordinate der Betrag $|\underline{A}(f)|$ eines Codespektrums $\underline{A}(f)$ sowie der Betrag $(\underline{R}(\tau)|$ einer Autokorrelationsfunktion $\underline{R}(\tau)$ zweier Binärcodes und auf der Abszisse $f.T_c$ bzw. $\tau/T_c$ aufgetragen sind; |
| Fig.8(a) bis Fig.8(c) | Kurven von Optimierungsergebnissen für unterschiedliche Codelängen N; |
| Fig.9 | eine schematische Darstellung einer Empfangseinrichtung mit einer STC-Einheit und einer Kompensationseinheit; |
| Fig.10(a) bis 10(c) | jeweils den Betrag $|\overset{\wedge}{\underline{x}}_{os}|$ geschätzter Kanalimpulsantworten $\overset{\wedge}{\underline{x}}_{os}$ bei einer Dopplerverschiebung<br><br>a) $f_d$ gleich 500 Hz,<br>b) $f_d$ gleich 1000 Hz,<br>c) $f_d$ gleich 2000 Hz; |
| Fig.11 | eine Kurvendarstellung, in welcher ein Gütemaß $v(f_d)$ in Abhängigkeit von einer auf der Abszisse aufgetragener Dopplerverschiebung $f_d$ für optimierte Binärcodes bestimmter Länge wiedergegeben sind; |
| Fig.12 | in Form eines Blockschaltbildes eine prinzipielle Struktur eines Empfängers eines digitalen Systems mit erwartungstreuer Kanalschätzung; |
| Fig.13(a) bis 13(c) | Graphen, bei welchen auf der Ordinate eine SNR-Degradation $d_{os}$ als Funktion der auf der Abszisse aufgetragenen Wortbreite $m_M$ quantisierter Elemente der Schätzmatrix eines optimalen, erwartungstreuen Kanalschätzers für Binärcodes unterschiedlicher Codelänge N wiedergegeben sind; |
| Fig.14(a) bis 14(c) | weitere Graphen, in welchen auf der Ordinate ein Gütemaß V für optimierte Binärcodes bestimmter Länge N als Funktion einer auf der Abszisse aufgetragenen Wortbreite $m_M$ |

für unterschiedliche Wortbreiten $m_e$ wiedergegeben sind;

Fig.15    Graphen, bei welchen auf der Ordinate ein Prozeßgewinn $p_I(dB')$ in Abhängigkeit von einer auf der Abszisse aufgetragenen Anzahl K von Integrationsschritten für unterschiedliche Dopplerverschiebungen wiedergegeben sind, und

Fig.16    weitere Graphen, in welchen der Prozeßgewinn $p_I(dB)$ in Abhängigkeit von einer auf der Abszisse aufgetragenen Anzahl K von Integrationsschritten für unterschiedliche Pulswiederholdauer $T_r$ aufgetragen ist.

Nunmehr wird ein modifizierter Algorithmus zur aufwandgünstigen erwartungstreuen Kanalschätzung im einzelnen beschrieben. Eine Matrix $\underline{B}$ ist bekanntlich dann besonders aufwandgünstig invertierbar, wenn die Matrix $\underline{B}$ rechtszirkulant ist, d.h. wenn gilt

$$\underline{B} = \begin{bmatrix} \underline{b}_1 & \underline{b}_2 & \underline{b}_3 \cdots & \underline{b}_{N-1} & \underline{b}_N \\ \underline{b}_N & \underline{b}_1 & \underline{b}_2 \cdots & \underline{b}_{N-2} & \underline{b}_{N-1} \\ \vdots & & & & \vdots \\ \underline{b}_2 & \underline{b}_3 & \underline{b}_4 \cdots & \underline{b}_N & \underline{b}_1 \end{bmatrix} \qquad (15)$$

Wird die Matrix $\underline{A}$ der Dimension $(M+N-1) \times M$ in Gl.(12) zur rechtszirkulanten quadratischen Matrix $\underline{A}_E$

$$\underline{A}_E = \begin{bmatrix} \underline{c}_1 & 0 & \cdots\cdots\cdots\cdots & 0 & \underline{c}_N & \cdots\cdots & \underline{c}_3 & \underline{c}_2 \\ \underline{c}_2 & \underline{c}_1 & & \vdots & 0 & \underline{c}_N & \cdots & \underline{c}_3 \\ \underline{c}_3 & \underline{c}_2 & \underline{c}_1 & \vdots & \vdots & & \ddots & \vdots \\ \vdots & \vdots & \ddots & \vdots & 0 & & & \underline{c}_N \\ \underline{c}_N & \vdots & & \underline{c}_1 & \underline{c}_1 & 0 & & 0 \\ 0 & \underline{c}_N & & \underline{c}_2 & \underline{c}_2 & & & \vdots \\ \vdots & \ddots & & \vdots & \vdots & & & 0 \\ 0 & \cdots\cdots & 0 & \underline{c}_N & \underline{c}_{N-1} & \cdots\cdots & & \underline{c}_1 \end{bmatrix} \qquad (16)$$

der Dimension $(M+N-1) \times (M+N-1)$ erweitert, so gilt mit einer erweiterten Kanalimpulsantwort

$$\underline{x}_E = (\underbrace{\underline{x}_1, \underline{x}_2 \ldots \underline{x}_M}_{\underline{x}}, \underbrace{0 \ldots 0}_{N-1 \text{ Nullen}})^T \qquad (17)$$

für das Empfangssignal weiterhin

$$\underline{e} = \underline{A}\,\underline{x} + \underline{n} \stackrel{!}{=} \underline{A}_E\,\underline{x}_E + \underline{n}. \qquad (18)$$

Da die Matrix $\underline{A}_E$ nach Gl.(16) im Gegensatz zur Matrix $\underline{A}$ nach Gl.(12) quadratisch ist, folgt für einen modifizierten erwartungsgetreuen Kanalschätzer für das Empfangssignal $\underline{e}$ nach Gl.(18):

$$\hat{\underline{x}}_{MOS} = (\underline{A}_E^{*T} \underline{A}_E)^{-1} \underline{A}_E^{*T} \underline{e} = \underline{A}_E^{-1} \underline{A}_E^{*T-1} \underline{A}_E^{*T} \underline{e} = \underline{A}_E^{-1} \underline{e}. \tag{19}$$

Der modifizierte, erwartungstreuer Kanalschätzer nach Gl.(19) ist somit durch eine Schätzmatrix $\underline{A}_E^{-1}$ charakterisiert. Die modifizierte erwartungstreue Kanalschätzung nach Gl.(19), bei der das Empfangssignal $\underline{e}$ nach Gl. (18) mit der Schätzmatrix $\underline{A}_E^{-1}$ multipliziert wird, kann wegen der rechtszirkulanten Struktur der Matrix $\underline{A}_E^{-1}$ als zyklische Korrelation des Empfangssignals $\underline{e}$ nach Gl.(18) bzw. Gl.(12) mit den Elementen $\underline{W}_{1,i}$ mit i=1...M+N-1, in der ersten Zeile der Schätzmatrix $\underline{A}_E^{-1}$ aufwandsgünstig implementiert werden (siehe Fig.5). Da die (M+N-1) Koeffizienten $t_i = \underline{W}_{1,i}$ des zyklischen Korrelators nach Fig.5 sowohl vom expandierten Sendeimpuls c nach Gl.(2) als auch von der Anzahl M der betrachteten Entferungstore abhängig sind, nutzt die modifizierte erwartungstreue Kanalschätzung nach Gl.(19) im Gegensatz zur signalangepaßten Filterung nach Gl.(13) das a-priori-Wissen nicht nur über den gesendeten expandierten Impuls $\underline{c}$, sondern auch über die Anzahl M der betrachteten Entfernungstore und damit die maximal interessierende Reichweite des Radarsystems aus.

Bei einer rechtszirkulanten Matrix $\underline{A}_E$ ist die Transformationsmatrix **T**, die die Matrix $\underline{A}_E$ in eine Diagonalmatrix transformiert, die Matrix

$$\underline{T} = \underline{T}_{DFT} = [\, e^{-j2\pi(r-1)(l-1)/(M+N-1)}\,], \qquad r,l=1...M+N-1, \tag{20}$$

der diskreten Fouriertransformation (DFT).

Mit $\underline{\mathbf{T}}_{DFT}$ nach Gl.(20) und der diskreten Fouriertransformierten

$$\underline{\lambda} = \underline{T}_{DFT}\,(\underline{c}_1,\underline{c}_2...\underline{c}_N,\,O\,..O)^T = \underline{T}_{DFT}\,\underline{c}_E \tag{21}$$

des um (M-1) Nullelemente erweiterten, expandierten Sendeimpulses $\underline{c}$ wird die rechtszirkulante Matrix $\underline{\mathbf{A}}_E$ nach Gl.(16)

$$\underline{A}_E = \frac{1}{M+N-1}\underline{T}_{DFT}^{*}\,\underline{\Lambda}\,\underline{T}_{DFT} \tag{22}$$

in die Diagonalmatrix

$$\underline{\Lambda} = \mathrm{diag}(\underline{\lambda}_1,\underline{\lambda}_2...\underline{\lambda}_{M+N-1}) = \mathrm{diag}(\underline{\lambda}) \tag{23}$$

transformiert. Mit Gl.(22) und der für die unitäre Matrix $\underline{T}_{DFT}$ nach Gl.(20) gültigen Beziehung

$$\underline{T}_{DFT}^{*} = \underline{T}_{DFT}^{*T} = \underline{T}_{DFT}^{-1} \cdot (M+N-1) \tag{24}$$

folgt für die zu Gl.(19) äquivalente Darstellung der erwartungstreuen Kanalschätzung im Frequenzbereich

$$\hat{\underline{x}}_{MOS} = \underline{A}_E^{-1}\,\underline{e} = \underbrace{\underline{T}_{DFT}^{-1}\,\underbrace{\underline{\Lambda}^{-1}\,\underbrace{\underline{T}_{DFT}\,\underline{e}}_{I}}_{II}}_{III}. \tag{25}$$

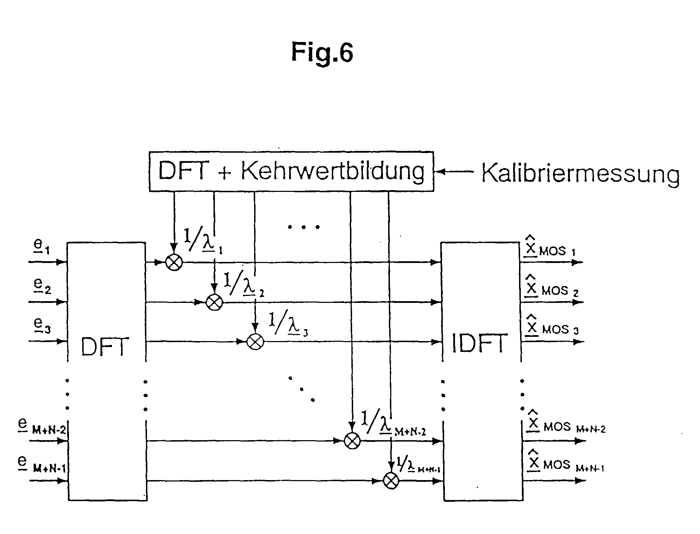

Nach Gl.(25) kann somit der modifizierte, erwartungstreue Kanalschätzer, wie in Fig.6 dargestellt, realisiert werden. Bei der modifizierten, erwartungstreuen Kanalschätzung nach Gl.(25) wird in einem ersten Schritt I die diskrete Fouriertransformierte $\underline{\mathbf{T}}_{DFT}\underline{e}$ des Empfangssignals $\underline{e}$ nach Gl.(18) bzw. Gl.(12) gebildet. In einem zweiten Schritt II, der eigentlichen Kanalschätzung, wird mit dem Empfangssignal $\underline{e}$ nach Gl.(18) bzw. Gl.(12) und $\underline{\Lambda}$ nach Gl.(23) die erwartungstreue Schätzung

$$\underline{\Lambda}^{-1}\underline{T}_{DFT}\ \underline{e} = \underline{T}_{DFT}\ \underline{x}_{\underline{c}} + \underline{\Lambda}^{-1}\underline{T}_{DFT}\ \underline{n} \tag{26}$$

der diskreten Fourier-(DF-)Transformierten $\underline{T}_{DFT}\ \underline{x}_E$ der erweiterten Kanalimpulsantwort $\underline{x}_E$ nach Gl.(17) bestimmt, indem die i-te Komponente des Vektors $\underline{T}_{DFT}\ \underline{e}$ durch die i-te Komponente $\lambda_i$ der diskreten Fouriertransformierten $\underline{\lambda}$ des erweiterten expandierten Sendeimpulses $\underline{c}_E$ nach Gl.(21) dividiert wird. Durch inverse DF-Transformation der Schätzung $\underline{\Lambda}^{-1}\underline{T}_{DFT}\ \underline{e}$ nach Gl.(26) wird in einem dritten Schritt III die erwartungstreue Schätzung $\underline{x}_{MOS}$ der erweiterten Kanalimpulsantwort $\underline{x}_E$ nach Gl.(17) berechnet.

Da im betrachteten NR-Netz zum Erreichen einer Dynamik von 40 bis 50 dB Kalibriermessungen bei kurzgeschlossenem Sender und Empfänger in zeitlichen Abständen von ca. 1 min durchgeführt werden müssen, ist bei der modifizierten erwartungstreuen Kanalschätzung nach Fig.6 der Vektor $\underline{\lambda}$ nach Gl.(21) durch die DF-Transformation des bei der Kalibriermessung im Empfänger gemessenen, effektiven, expandierten Impulses zu ersetzen. Wird die modifizierte erwartungstreue Kanalschätzung gemäß Fig.6 implementiert, so muß nach jeder Kalibriermessung nicht die Matrix $\underline{A}_E$ nach Gl.(16) invertiert werden, sondern lediglich die DF-Transformation des bei der Kalibriermessung aufgenommenen und gemäß Gl.(21) erweiterten, effektiven, expandierten Impulses berechnet werden.

Gemäß Gl.(25) und Fig.6 ist der modifizierte, erwartungstreue Kanalschätzer für solche expandierte Impulse $\underline{c}$ realisierbar, für die alle Beträge $|\lambda_i|$ (i=1...N) der diskreten Fouriertransformierten $\underline{\lambda}$ gleich $\underline{T}_{DFT}\ \underline{c}_E$ nach Gl.(21) von Null verschieden sind.

Physikalisch bedeutet dies, daß die diskrete Fouriertransformierte $\underline{T}_{DFT}\ \underline{x}_E$ der erweiterten Kanalimpulsantwort $\underline{x}_E$ nach Gl.(17) nur bei denjenigen Spektralwerten erwartungstreu geschätzt werden kann, bei denen der gesendete expandierte Impuls $\underline{c}$ den Radarkanal mit nicht verschwindender Energie erregt.

Am Ausgang eines erwartungstreuen Kanalschätzers 18 wird aufgrund eines reflektiertenden Objektes im Radarkanal ein erwartungstreuer Schätzwert $\underline{x}_{OSi}$ bzw. $\underline{x}_{MOSi}$ für die Reflektivität $\underline{x}_i$ dieses Objektes erhalten. Systematische Fehler, die mit Korrelationsnebenmaxima am Ausgang eines signalangepaßten Filters vergleichbar sind, werden bei erwartungstreuer Kanalschätzung dagegen von vornherein vermieden. Ist im Empfangssignal $\underline{e}$ nach Gl.(12) das additive Rauschen $\underline{n}$ nach Gl.(10) enthalten, so wird auch am Ausgang eines erwartungstreuen Kanalschätzers ein additives Rauschen erhalten, dessen Leistung jedoch stets größer ist als die Leistung des additiven Rauschens am Ausgang eines signalangepaßten Filters. Wegen des Eliminierens der Korrelationsnebenmaxima bei erwartungstreuer Kanalschätzung ist - im Vergleich zum maximalen SN-Verhältnis am Ausgang eines signalangepaßten Filters - das SN-Verhältnis am Ausgangs des erwartungstreuen Kanalschätzers um eine SNR-Degradation $d_{OS}$ bzw. $d_{MOS}$ geringer. Da bei einem expandierten Sendeimpuls $\underline{c}$ der Länge N für den maximalen Prozeßgewinn $P_{max/dB}$ des signalangepaßten Filters gilt:

$$p_{MF}/dB = p_{max}/dB = 10\ \text{lg}\ N, \tag{27}$$

folgt für den Prozeßgewinn des optimalen erwartungstreuen Kanalschätzers nach Gl.(14):

$$p_{OS}/dB = p_{MF}\ /dB - d_{OS}/dB \tag{28}$$

und für den Prozeßgewinn des modifizierten, aufwandsgünstig zu implementierenden erwartungstreuen Kanalschätzers nach Gl.(19):

$$p_{MOS}/dB = p_{MF}\ /dB - d_{MOS}/dB. \tag{29}$$

Im Interesse eines großen Prozeßgewinns müssen expandierte Sendeimpulse $\underline{c}$ bei erwartungstreuer Kanalschätzung so gewählt werden, daß die SNR-Degradation $d_{OS}$ bzw. $d_{MOS}$ nach Gl.(28) bzw. Gl.(29) möglichst klein sind. Für das NR-Netz wird daher eine SNR-Degradation kleiner als 2dB gefordert.

Um die Sendesignalerzeugung in den Radarstationen des NR-Netzes kostengünstig realisieren zu können, werden im folgenden ausschließlich binärphasen-codierte, expandierte Impulse $\underline{c}$ betrachtet, d.h. $c_i \in [-1, +1]$, (i=1...N). Um eine Entfernungsauflösung von ca. 2m zu erreichen, beträgt die Chipdauer $T_c$ gleich 14 ns. Weiterhin werden im folgenden ausschließlich Binärcodes $\underline{c}$ der Länge N gleich 16, 32 und 64 betrachtet. In Tabelle 1 sind die einzelnen Punkte des Anforderungsprofils an den expandierten Sendeimpuls $\underline{c}$ zusammengefaßt.

Tabelle 1

| Modulationsart | binäre Phasensprungmodulation |
|---|---|
| Chipdauer | $T_c$ = 14ns ($\rightarrow \Delta$ r = 2,1m) |
| Codelänge | N = 16, 32, bzw. 64 |
| SNR-Degradation | < 2 dB |

Wie bereits ausgeführt, sind bei erwartungstreuer Kanalschätzung systematische Schätzfehler,die mit den Korrelationsnebenmaxima bei signalangepaßter Filterung vergleichbar sind, von vorneherein vermieden. Die erreichbare Dynamik bei erwartungstreuer Kanalschätzung ist daher nur noch durch das additive Rauschen am Empfängerausgang beschränkt. Deshalb sind bei erwartungstreuer Kanalschätzung expandierte Sendeimpulse $\underline{c}$ dahingehend zu optimieren, daß die Prozeßgewinne $p_{OS}$ und $p_{MOS}$ möglichst groß bzw. die SNR-Degradation $d_{OS}$ und $d_{MOS}$ in den Gln. (28) und (29) möglichst klein sind.

Wird das i-te Element der Hauptdiagonalen der Matrix $(\underline{A}^{*T} \underline{A})^{-1}$ in Gl.(14) mit $r_j$ bezeichnet, so berechnet sich die SNR-Degradation $d_{OS}$ des optimalen erwartungstreuen Kanalschätzers unter Berücksichtigung der vorstehenden Ausführungen zu

$$d_{OS}/dB = \max_i [10 \lg(r_i N)]. \qquad (30)$$

Mit der DF-Transformierten $\underline{\lambda}$ des erweiterten, expandierten Sendeimpulses $\underline{c}_E$ nach Gl.(21) berechnet sich die SNR-Degradation $d_{MOS}$ des modifizierten erwartungstreuen Kanalschätzers zu

$$d_{MOS}/dB = 10 \lg \left( \sum_{r=1}^{M+N-1} |\underline{\lambda}_r|^2 \frac{1}{(M+N-1)^2} \sum_{l=1}^{M+N-1} \frac{1}{|\underline{\lambda}_l|^2} \right). \qquad (31)$$

Zu beachten ist, daß sowohl $d_{OS}$ nach Gl.(30) als auch $d_{MOS}$ nach Gl.(31) vom expandierten Sendeimpuls $\underline{c}$ nach Gl.(2) und der Anzahl M der betrachteten Entfernungstore abhängig ist. Umfangsreiche Untersuchungen haben jedoch gezeigt, daß der Einfluß des Parameters M auf die SNR-Degradationen $d_{OS}$ und $d_{MOS}$ nach den Gln.(30) bzw. (31) für M » N und bei geeigneter Wahl des expandierten Sendeimpulses $\underline{c}$ vernachlässigbar klein ist. Ferner ist die SNR-Degradation $d_{MOS}$ des modifizierten, aufwandsgünstig implementierbaren erwartungstreuen Kanalschätzers stets größer als die SNR-Degradation $d_{OS}$ des optimalen erwartungstreuen Kanalschätzers.

Für geeignete Binärcodes, die einerseits das Anforderungsprofil nach Tabelle 1 erfüllen, und mit denen andererseits geringe SNR-Degradationen $d_{MOS}$ und $d_{OS}$ erreicht werden, wird zunächst ausgehend von Gl.(31) eine Erklärung für die SNR-Degradation $d_{MOS}$ angegeben. Nach Gl.(31) ist die SNR-Degradation $d_{MOS}$ ausschließlich durch die Beträge $|\underline{\lambda}_i|$ der Elemente $\underline{\lambda}_i$ (i=1...M+N-1) der DF-Transformierten $\underline{\lambda}$ des erweiterten expandierten Sendeimpulses $\underline{c}_E$ nach Gl.(21) bestimmt, womit die betragsmäßig kleinen Werte $\underline{\lambda}_i$ zur SNR·Degradation $d_{MOS}$ den größten Beitrag liefern. Unter Berücksichtigung der Beziehung

$$\underline{\lambda}_i = \underline{A}(f = \frac{i-1}{T_c(M+N-1)}), \qquad (32a)$$

mit

$$\underline{A}(f) = \sum_{i=1}^{N} \underline{c}_i \exp(-j2\pi f T_c(i-1)), \qquad (32b)$$

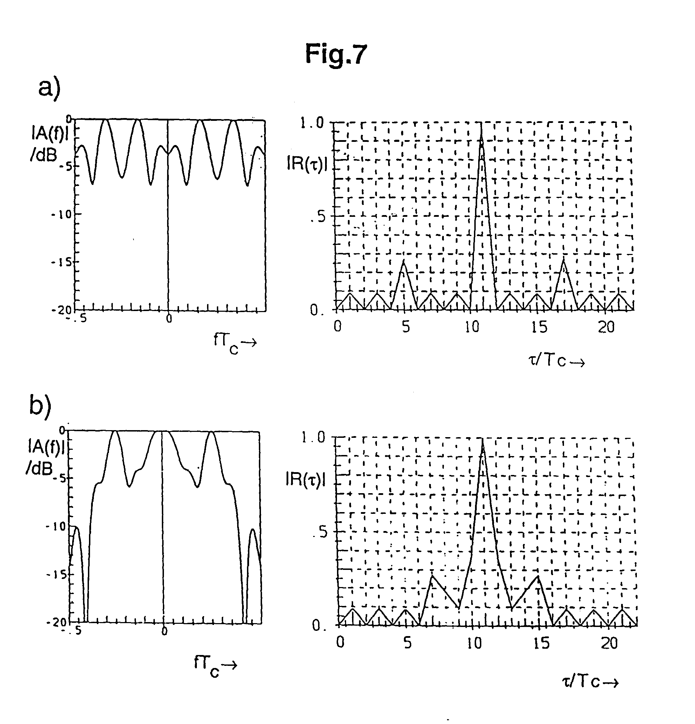

wird der große Beitrag der kleinen Werte $|\underline{\lambda}_i|$ zur SNR-Degradation $d_{MOS}$ nach Gl.(31) anhand der Schätzerstruktur in Fig.6 offensichtlich; denn der erwartungstreue Kanalschätzer nach Fig.6, als das zur DF-Transformierten $\underline{\lambda}$ des erweiterten expandierten Sendeimpulses $\underline{c}_E$ nach Gl.(21) inverse Filter, hat für Spektralwerte, für die $|\underline{\lambda}_i|$ klein ist, eine große Verstärkung. Entsprechend dieser Verstärkung wird jedoch nicht nur das Nutzsignal, sondern auch das dem Empfangssignal $\underline{e}$ additiv überlagerte Rauschen $\underline{n}$ nach Gl.(10) frequenzselektiv verstärkt. In Fig.7a und 7b sind die Beträge der mit ($fT_c$=1) periodischen Spektren $\underline{A}(f)$ nach Gl.(32b) und der Autokorrelationsfunktionen $\underline{R}(\tau)$ zweier für die erwartungstreue Kanalschätzung unterschiedlich gut geeigneter Binärcodes der Länge N gleich 11 dargestellt.

Obwohl das Verhältnis der Korrelationshauptspitze zum größten Korrelationsnebenmaximum (engl. peak-to-sidelobe ratio PSR) der Autokorrelationsfunktion bei beiden Binärcodes gleich ist, sind die SNR-Degradationen $d_{MOS}$ stark unterschiedlich. Während mit dem Binärcode nach Fig. 7a die SNR-Degradation $d_{MOS}$ nach Gl.(31) nur 0,93 dB beträgt, ist der Binärcode nach Fig.7b aufgrund der SNR-Degradation $d_{MOS}$ von 17,8 dB für die erwartungstreue Kanalschätzung ungeeignet. Binärcodes c, die für die erwartungstreue Kanalschätzung besonders gut geeignet sind, zeichnen sich somit durch einen besonders konstanten Verlauf des Betrags $|\underline{A}(f)|$ des Spektrums A(f) nach Gl. (32b) aus.

Die einfachste Methode zum Auffinden geeigneter Binärcodes $\underline{c}$ ist ein rechnergestütztes Durchsuchen aller möglichen Codes. Für eine Codelänge N = 16 ist ein solches Durchsuchen aller 65 536 möglichen Binärcodes mit einem leistungsfähigen Großrechner noch möglich. Für die weiteren Codelängen N gleich 32 und 64 ist ein vollständiges Durchsuchen jedoch nicht mehr möglich, so daß man auf Simulationen mit zufällig ausgewürfelten Binärcodes angewiesen ist. Bei einer Simulation zum Auffinden geeigneter Binärcodes auf einem Großrechner wurde unter allen 65 536 Binärcodes möglichen Binärcodes der Länge N gleich 16 derjenige Binärcode $\underline{c}$ mit der geringsten SNR-Degradation $d_{MOS}$ nach Cl.(31) bestimmt.

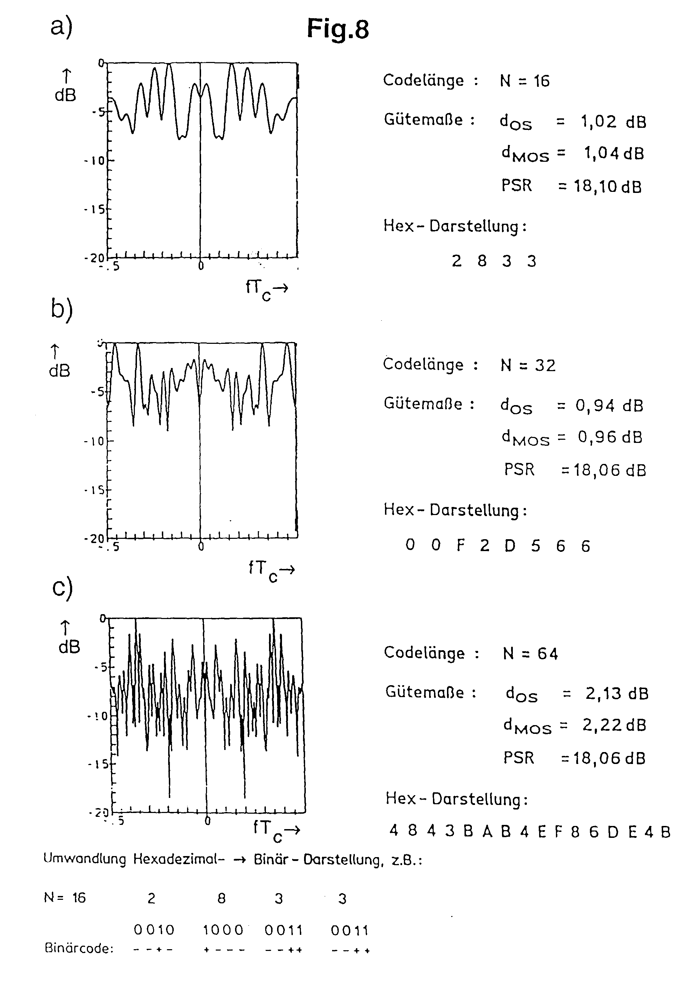

Weiterhin wurden für N gleich 32 und 64 jeweils 1 Million Binärcodes mit einem Zufallsgenerator ausgewürfelt und jeweils derjenige Binärcode bestimmt, der aufgrund der geringsten SNR-Degradation $d_{MOS}$ für die erwrtungstreue Kanalschätzung am besten geeignet ist. In Fig. 8 sind die im Rahmen einer Simulation ermittelten Binärcodes der Länge N gleich 16, 32 und 64 in hexadezimaler Darstellung aufgelistet. Weiterhin sind in Fig.8 die zugehörigen Werte der Gütemaße $d_{OS}$ nach Gl.(30), $d_{MOS}$ nach Gl.(31) und PSR sowie der Betrag $|\underline{A}(f)|$ des Codespektrums $\underline{A}(f)$ nach Gl.(32b) angegeben. Während die mit den in Fig.8 angegebenen Binärcodes $\underline{c}$ der Länge N gleich 16 und 32 erreichten SNR-Degradationen von 1,03 dB bzw. 0,95 dB deutlich geringer sind als die maximal zulässige SNR-Degradation von 2dB nach Tabelle 1, erfüllt die mit dem Binärcode der Länge N gleich 64 erreichte SNR-Degradation von 2,2 dB nur näherungsweise die Mindestanforderung nach Tabelle 1.

Umfangreiche Untersuchungen bei der Anmelderin haben ergeben, daß bei dem NR-Netz eine Absolutdynamik von ca. 90 bis 100 dB anzustreben ist. Diese Absolutdynamik ist separierbar in

    1. eine Dynamik von ca. 50 dB, die durch Anwenden einer STC-(Sensitivity Time Control) Einheit bei der Verstärkung des Empfangssignals erreicht wird, und

    2. eine Relativdynamik innerhalb eines Echoprofils von 40 bis 50 dB, um auch sehr kleine Objekte in der Nähe von großen Objekten im Kontrollbereich des NR-Netzes detektieren zu können.

Die in den Empfängereinrichtungen der einzelnen Radarstationen des NR-Netzes eingesetzte STC-Einheit ist eine zeitveränderliche Verstärkeranordnung, mit der der Einfluß der Funkfelddämpfung kompensiert wird. Weiterhin wird mit dieser STC-Einheit gewährleistet, daß die Grenzempfindlichkeit des Empfängers auch bei sehr schwachen Echosignalen nicht unterschritten wird. Die Regelspannung der STC ist im Empfänger jeweils digital abgespeichert und kann somit bei der digitalen empfängerseitigen Signalverarbeitung als a-priori-Wissen genutzt werden.

Die Relativdynamik innerhalb eines Echoprofils ist im folgenden bei kompensierter Funkfelddämpfung als maximales Verhältnis der Beträge zweier aus der geschätzten Kanalimpulsantwort des Radarkanals detektierbaren Reflektivitäten definiert. Bei erwartungstreuer Kanalschätzung ist aufgrund von im vorhinein vermiedenen Korrelationsnebenmaxima die erreichbare Dynamik nur noch durch das additive Rauschen, d.h. bei festem SNR am Empfängereingang und vorgegebener Codelänge N durch die SNR-Degradation $d_{OS}$ bzw. $d_{MOS}$ nach Gl.(30) bzw. Gl.(31) begrenzt. Mit den Binärcodes in Fig.8 werden minimale bzw. sehr niedrige SNR-Degradationen erreicht, weshalb die in Fig.8 angegebenen Binärcodes für ein Empfängerkonzept mit erwartungstreuer Kanalschätzung besonders gut geeignet sind.

Die in den Empfangseinrichtungen der Radarstationen des NR-Netzes implementierte STC-Einheit ist eine Verstärkereinheit mit zeitlich veränderlicher Verstärkung. Die Regelspannung der STC-Einheit ist dabei so gewählt, daß der Einfluß der Funkfelddämpfung kompensiert wird, d.h. Echosignale aufgrund reflektierender Objekte nahe der Radarantenne gedämpft werden, während Echosignale aufgrund reflektierender Objekte an der äußeren Grenze des Kontrollbereichs des NRN-Moduls verstärkt werden. Die STC-Einheit ist weiterhin notwendig, um ein Unterschreiten der Grenzempfindlichkeit des Empfängers zu vermeiden. Der zeitliche Verlauf der Regelspannung ist im Empfänger digital abgespeichert. Unabhängig von der Art der empfängerseitigen Signalverarbeitung zur Kanalschätzung ist der Einfluß der STC-Einheit nach der Digitalisierung des Empfangssignals zu kompensieren.

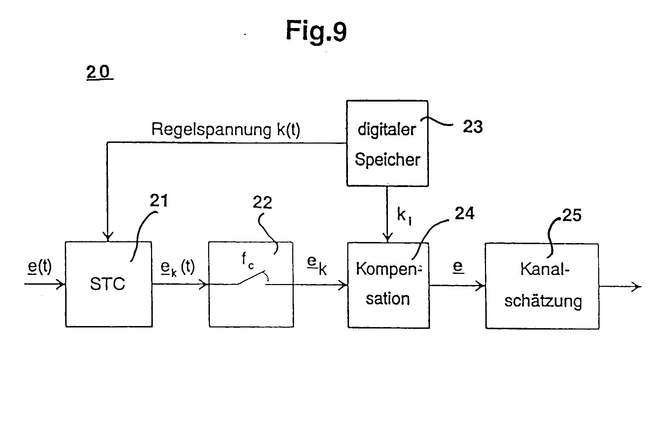

Fig.9 zeigt eine Empfängereinrichtung 20 mit einer STC-Einheit 21 und einer entsprechenden Kompensationseinrichtung. Das Empfangssignal e(t) nach Gl.(7) wird zunächst der STC-Einheit 21 zugeführt. Das Signal $\underline{e}_k(t)$ am Ausgang der STC-Einheit 21 ist gemäß der zeitlich veränderlichen Regelspannung k(t) verstärkt. Aufgrund der bei der Kanalschätzung angestrebten digitalen Signalverarbeitung wird das Signal $\underline{e}_k(t)$ zunächst einem Abtaster 22 mit der Abtastfrequenz fc gleich $1/T_c$ zugeführt. Werden die Abtastwerte $k(iT_c)$ (i=1,...,M+N-1) der im Empfänger 20 digital in einem Speicher 23 abgespeicherten Regelspannung k(t) mit $k_i$ (i=1,...M+N-1) bezeichnet, so wird mit den Abtastwerten $\underline{e}_i$ (i=1,...M+N-1) des Empfangssignals $\underline{e}(t)$ nach Gl.(7) für den Vektor der Abtastwerte des Signals $\underline{e}_k(t)$ erhalten:

$$\underline{e}_k = (\underline{e}_{k,1}, \underline{e}_{k,2}, ..., \underline{e}_{k,M+N-1})^T$$

$$= (k_1 \underline{e}_1, k_2 \underline{e}_2, ..., k_{M+N-1} \underline{e}_{M+N-1})^T. \tag{33}$$

Da bei ausreichend großer Wortbreite der digitalisierten Abtastwerte $\underline{e}_{k,i}$ (i=1,...M+N-1) der Dynamikbereich bei der digitalen Signalverarbeitung wesentlich größer ist als am Empfängereingang, kann der Einfluß der STC-Einheit 21 nach der Digitalisierung des Signals $\underline{e}_k(t)$ wieder kompensiert werden. In einer Kompensationseinrichtung 24 der Fig.9 wird aus dem Vektor $\underline{e}_k$ nach Gl.(33) der Vektor $\underline{e}$ nach Gl.(12) gemäß

$$\underline{e} = (\underline{e}_{k,1}/k_1, \underline{e}_{k,2}/k_2,...., \underline{e}_{k,M+N-1}/k_{M+N-1})^T \tag{34}$$

gebildet. Aus Gl.(34) ist zu ersehen, daß die Kompensation des Einflusses der STC-Einheit unabhängig von der Art der empfängerseitigen Signalverarbeitung zum Kanalschätzen durchgeführt werden muß. Die eigentliche Kanalschätzung erfolgt dann in einem Kanalschätzer 25.

Wird ein expandierter Sendeimpuls a(t) mit der Trägerfrequenz $f_o$ an einem bewegten Ziel mit der Radialgeschwindigkeit $v_r$ zur Radarantenne reflektiert, so ist die Trägerfrequenz $f_o$ des reflektierten Echosignals um die Dopplerfrequenz

$$f_d = \frac{2 v_r f_0}{c_0} \tag{35}$$

verschoben, wobei $c_o$ die Lichtgeschwindigkeit ist. Die Trägerfrequenz des an einem Bewegtziel reflektierten, expandierten Sendeimpulses ist um die Dopplerfrequenz $f_d$ nach Gl.(35) erhöht, wenn sich das Ziel auf die Radarantenne zubewegt,und um die Dopplerfrequenz $f_d$ erniedrigt, wenn sich das Ziel von der Radarantenne wegbewegt. Mit der Dopplerfrequenz $f_d$ nach Gl.(35) gilt für die komplexe Reflektivität eines Bewegtziels mit der Radialgeschwindigkeit $v_{ri}$ im i-ten Entfernungstor

$$\underline{x}_i(t) = \underline{x}_i e^{j2\pi f_{d_i} t} = \underline{x}_i e^{j \frac{4\pi v_{ri} f'_a t}{c_o}}, \qquad i=1...M. \tag{36}$$

Nach Gl.(36) ändert sich aufgrund der Dopplerfrequenz $f_{di}$ das Argument $arg(\underline{x}_i(t))$ der komplexen Reflektivität $\underline{x}_i(t)$ mit der Zeit t, während der Betrag $|\underline{x}_i|$ der komplexen Reflektivität $\underline{x}_i(t)$ während der Dauer der Reflexion, d.h. während der Dauer N $T_c$ des expandierten Sendeimpulses a(t), als zeitinvariant angenommen werden kann.

Befinden sich Bewegtziele im Kontrollbereich eines NR-Netz-Moduls, so ist das Empfangssignal an den zugehörigen Radarstationen gleich der Summe von zeitverschobenen und mit den komplexen Reflektivitäten $\underline{x}_i$ gewichteten, dopplerverschobenen Versionen des expandierten Sendeimpulses. Da jedoch der nach Gl.(14) durch die Schätzmatrix $(\underline{A}^{*T}\underline{A})^{-1}\underline{A}^{*T}$ gekennzeichnete, optimale erwartungstreue Kanalschätzer das Empfangssignal durch eine Summe von zeitverschobenen und gewichteten Versionen des gesendeten, nicht dopplerverschobenen expandierten Impulses $\underline{c}$ im Sinne kleinster Fehlerquadrate approximiert, ist die Schätzung $\underline{\hat{x}}_{OS}$ nach Gl.(14) am Ausgang des optimalen erwartungstreuen Kanalschätzers bzw. die Schätzung $\underline{\hat{x}}_{MOS}$ nach Gl.(19) am Ausgang des modifizierten erwartungstreuen Kanalschätzers bei dopplerverschobenem Empfangssignal nicht mehr erwartungstreu.

Als Gütemaß $v(f_d)$ zum Bewerten der systematischen Fehler aufgrund eines einzelnen Bewegtziels mit der komplexen Reflektivität $\underline{x}_i e^{j2\pi f_d t}$ nach Gl.(36) am Ausgang eines erwartungstreuen Kanalschätzers wird der minimale Quotient im logarithmischen Maß

$$v(f_d)/dB = 20 \lg \left( \min_i \frac{E[|\hat{\underline{x}}_{OSi}|]}{\max_{r \neq i}(E[|\hat{\underline{x}}_{OSr}|])} \right) \qquad (37)$$

aus der Erwartung $E[(\hat{\underline{x}}_{OSi}|]$ des Betrags $|\hat{\underline{x}}_{OSi}|$ des Schätzwertes $\hat{\underline{x}}_{OSi}$ und dem maximalen systematischen Fehler max $(E[|\underline{x}_{OSr}|])$ $(r \neq i)$ eingeführt. Das Gütemaß $v(f_d)$ nach Gl.(37), das vergleichbar ist mit dem PSR der Korelationsfunktion am Ausgang eines signalangepaßten Filters, ist direkt ein Maß für die bei großem SNR maximal erreichbare Relativdynamik. Der gesendete expandierte Impuls $\underline{a}(t)$ nach Gl.(3) soll nunmehr bei der Reflexion an einem Bewegtziel im Kontrollbereich eines NR-Netz-Moduls eine Dopplerverschiebung erfahren, wobei diese Dopplerverschiebung im Empfänger unbekannt ist.Es sind Dopplerverschiebungen $f_d$ im Intervall $-2000 \mathrm{Hz} \le f_d \le 2000$ Hz zu erwarten. Aus Symmetriegründen werden im folgenden Dopplerfrequenzen im Bereich $O \le f_d \le 2000$ Hz berücksichtigt. Weiterhin werden ausschließlich die optimierten und in Fig.8 angegebenen Binärcodes der Länge N gleich 16, 32 und 64 betrachtet.

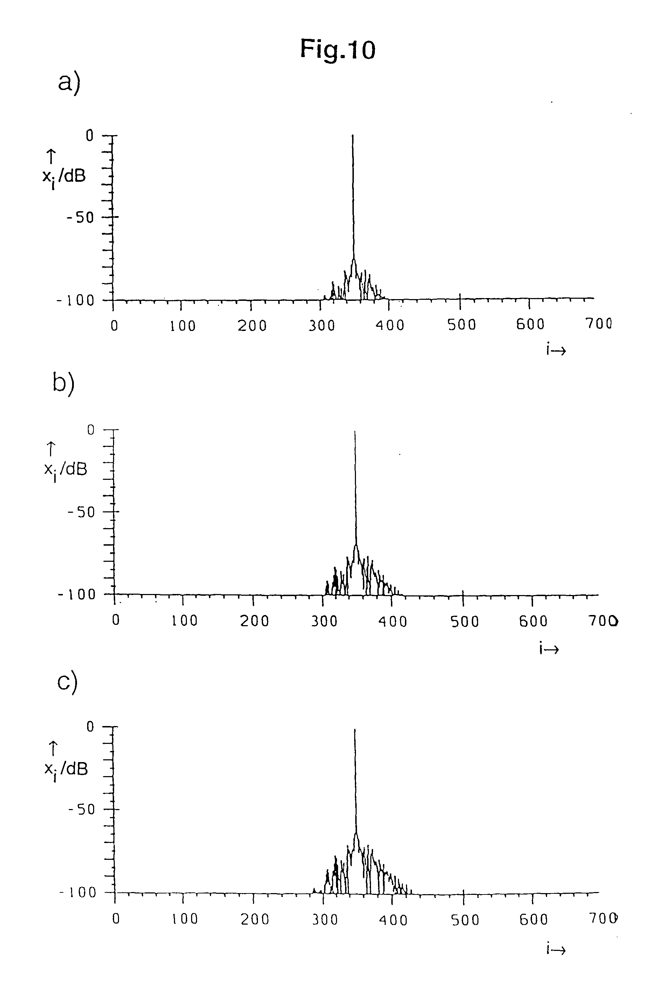

Fig.10(a) bis (c) zeigen den Betrag der geschätzten Kanalimpulsantwort $\underline{x}_{OS}$ nach Gl.(14) am Ausgang eines optimalen, erwartungstreuen Kanalschätzers für $f_d$ gleich 500 Hz, 1000 Hz bzw. 2000 Hz, wobei der optimierte Binärcode der Länge N gleich 32 als expandierter Sendeimpuls $\underline{c}$ nach Gl.(2) gewählt wurde (M = 700 Entfernungstore, Einzelziel mit $|x_i| = 0$ dB in Kanalmitte). Die Chipdauer $T_c$ ist gleich 14 ns, und die Sendefrequenz $f_o$ ist gleich 10 GHz. Wie erwartet (und wie aus Fig.10(a) bis (c) zu erkennen ist), wachsen die systematischen Schätzfehler mit zunehmender Dopplerverschiebung $f_d$ (Fig.10).

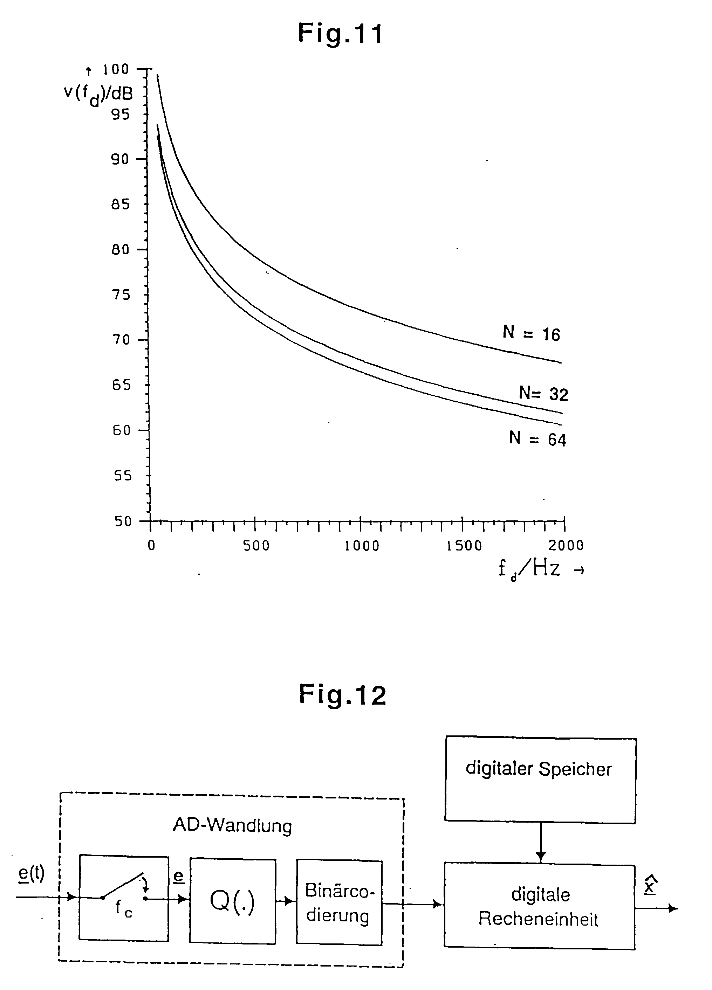

Als Gütemaß zum Bewerten der systematischen Schätzfehler am Ausgang eines erwartungstreuen Kanalschätzers bei unterschiedlichen Dopplerverschiebungen $f_d$ wurde in Gl.(37) der Quotient $v(f_d)$ eingeführt, der direkt ein Maß für die bei großem SNR erreichbare Relativdynamik innerhalb eines Echoprofils ist. Fig.11 zeigt das Gütemaß $v(f_d)$ in dB nach Gl.(37), das über der Dopplerverschiebung $f_d$ in Hz für die optimierten Binärcodes der Länge N gleich 16, 32 und 64 aufgetragen ist.

Für den Einfluß einer Dopplerverschiebung $f_d$ ist das Produkt $N \cdot T_c \cdot f_d$ aus der Impulsdauer $N \cdot T_c$ und der Dopplerverschiebung $f_d$ entscheidend. Dieses Produkt ist ein Maß für die Phasendrehung über der Impulsdauer $N \cdot T_c$ aufgrund der Dopplerverschiebung $f_d$. Bei vorgegebener Chipdauer $T_c$ gleich 14 ns und fester Dopplerverschiebung $f_d$ verringert sich deshalb das Gütemaß $v(f_d)$ nach Gl.(37) mit zunehmender Codelänge N (siehe Fig.11). Es ist jedoch wichtig, festzuhalten, daß bei den zu erwartenden Dopplerverschiebungen $f_d$ von bis zu 2000 Hz mit den optimierten Binärcodes, die bei großem SNR mit erwartungstreuer Kanalschätzung erreichbare Relativdynamik wesentlich größer ist als die geforderte Relativdynamik von 50 dB.

Die eingangs behandelten Algorithmen zum erwartungstreuen Kanalschätzen sind digitale Signalverarbeitungsalgorithmen. Deshalb werden im Empfänger einer jeden Radarstation die Quadraturkomponenten $e_I(t)$ und $e_Q(t)$ des Empfangssignals $e(t) = = e_I(t) + j \, e_Q(t)$ nach Gl.(7) zunächst mit der Abtastfrequenz $f_c$ abgetastet. Anschließend werden die Abtastwerte $\underline{e}_i$ des Empfangssignals $\underline{e}(t)$ einer Quantisierung

$$Q(\underline{e}_i) = \underline{w}_i = w_{Ii} + w_{Qi} \, , \, i = 1 \ldots M + N - 1, \qquad (38)$$

unterzogen.

Aufgrund der einfachen Realisierbarkeit wird im folgenden die äquidistante Rechteckquantisierung betrachtet; bei der Quantisierung werden die Abtastwerte $e_{Ii}$ und $e_{Qi}$ der Quadraturkomponenten $e_I(t)$ und $e_Q(t)$ des Empfangssignals $\underline{e}(t)$ nach Gl.(7) zwei gleichartigen $M_R$-stufigen Quantisierern mit der Quantisierungswortbreite $m_e$/bit gleich ld $(M_R)$ zugeführt, deren Übertragungsverhalten eine nullpunkt-symmetrische Kennlinie mit äquidistanten Schwellenabständen aufweist.

In einem digitalen System werden die quantisierten Abtastwerte $Q(\underline{e}_i)$ nach Gl.(38) durch binäre Codewörter der Länge $m_e$/bit dargestellt. Die Signalverarbeitungsschritte, Abtastung, Quantisierung und Binärcodierung zusammen, werden auch als Analog-Digital-Wandlung bezeichnet. Neben den Abtastwerten $\underline{e}_i$ des Empfangssignals $\underline{e}(t)$ nach Gl.(7) können aber auch die Elemente der Schätzmatrix, die einen erwartungstreuen Kanalschätzer vollständig charakterisiert, nur mit endlicher Wortbreite $m_M$/bit in einem digitalen Speicher im Empfänger abgelegt werden. Im folgenden wird die prinzipielle Struktur des Empfängers eines digitalen Systems mit erwartungstreuer Kanalschätzung nach Fig.12 betrachtet.

Als digitale Recheneinheit, in der die eigentliche Kanalschätzung ausgeführt wird, kann ein Mikroprozessor oder ein digitaler Signalprozessor (DSP) eingesetzt werden, deren interne Wortbreiten deutlich größer als die Wort-

breiten $m_e$ bzw. $m_M$ sind. Mit abnehmenden Wortbreiten $m_e$ bzw. $m_M$ werden die Kanalschätzungen $\hat{\underline{x}}_{OS}$ bzw. $\hat{\underline{x}}_{MOS}$ nach Gl.(14) bzw. Gl.(19) zunehmend durch den Quantisierungsfehler verfälscht. Eine geringe Wortbreite $m_e$ des emp-fängerseitigen AD-Wandlers ist jedoch insofern vorteilhaft, als die Komplexität eines AD-Wandlers mit zunehmender Wortbreite stark zunimmt. Weiterhin ist eine geringe Wortbreite $m_M$ deshalb vorteilhaft, da mit zunehmender Wortbreite $m_M$ die Größe des zum Abspeichern der Schätzmatrix notwendigen digitalen Speichers und der beim Kanalschätzen notwendige Datentransfer zwischen dem digitalen Speicher und der digitalen Recheneinheit anwächst.

[0068]$_\wedge$   Als globales Gütemaß zum Bewerten der mit abnehmenden Wortbreiten $m_e$ und $m_M$ zunehmenden Schätz-fehler $\underline{x}_{OSi}$-$\underline{x}_i$ wird der Quotient im logarithmischen Maß

$$V/dB = 10 \; \lg \; \frac{\max_i(|\underline{x}_i|)^2}{E[\frac{1}{M}\| \hat{\underline{x}}_{OS}- \underline{x} \|^2]} \tag{39}$$

aus dem Quadrat der betragsmäßig größten Reflektivität $\max_\wedge(|x_i|)^2$ und dem Erwartungswert der mittleren quadrati-schen Abweichung $\frac{1}{M}\|\underline{x}_{os} -\underline{x} \|^2$ zwischen der Kanalschätzung $\underline{x}_{OS}$ und der wahren Kanalimpulsantwort $\underline{x}$ eingeführt. Das Gütemaß V nach Gl.(39) ist ein Maß für die abhängig von den Wortbreiten $m_M$ und $m_e$ im rauschfreien Fall er-reichbare Relativdynamik innerhalb eines Echoprofils.

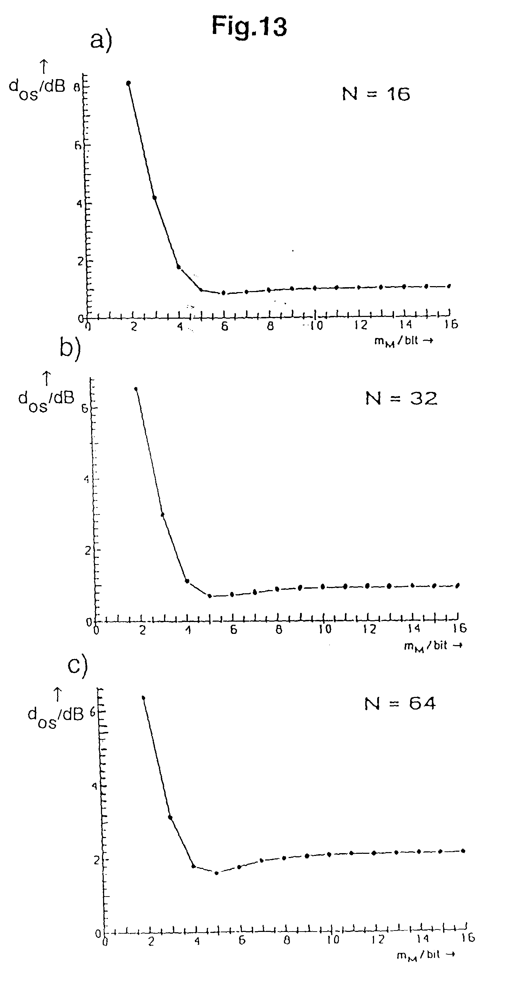

In Fig.13a bis c ist die SNR-Degradation $d_{OS}$ eines optimalen erwartungsfreuen Kanalschätzers über der Wortbreite $m_M$/bit für die optimierten Binärcodes der Länge N gleich 16, 32 und 64 aufgetragen. Die in Fig.13 dargestellten Verläufe zeigen, daß für typische Wortbreiten schneller digitaler Speicher von beispielsweise $m_M = 8$ Bit, der Einfluß der Wortbreite $m_M$ der quantisierten Elemente der Schätzmatrix $(\underline{A}^{*T}\underline{A})^{-1}\underline{A}^{*T}$ eines optimalen erwartungstreuen Kanalschätzers auf die SNR-Degradation $d_{OS}$ unabhängig vom verwendeten Binärcode vernachlässigbar gering ist.

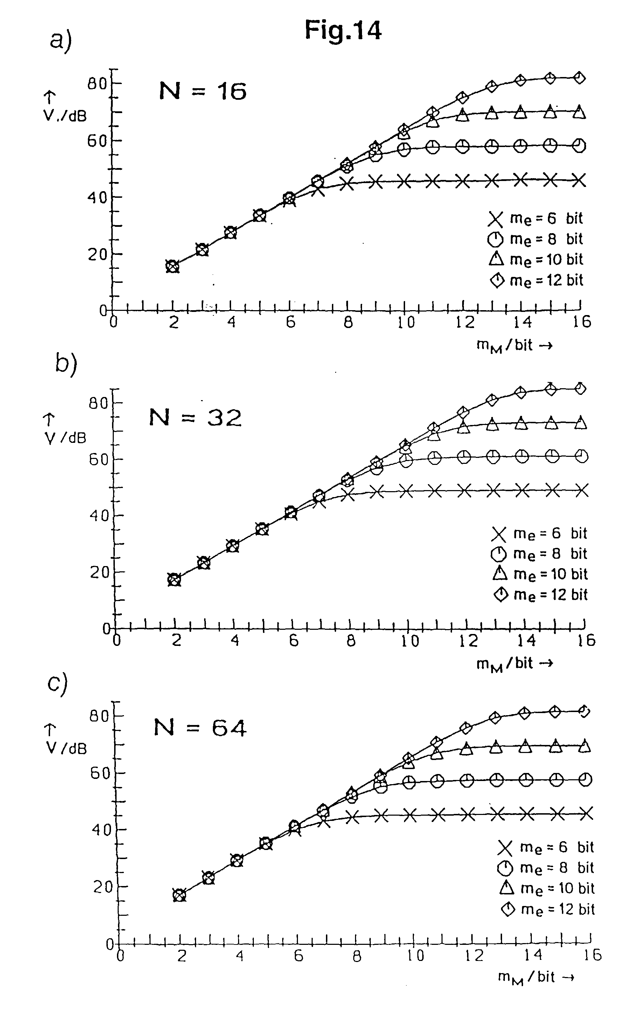

In Fig.14a bis 14c ist das Gütemaß V nach Gl.(39) wiederum für die optimierten Binärcodes der Länge N gleich 16, 32 und 64 für unterschiedliche Wortbreiten $m_e$ aufgetragen. Fig.14a bis 14c zeigt, daß für $m_M < m_e$ mit zunehmender Wortbreite $m_M$ eine Dynamikerhöhung um 6dB/bit erreicht wird. Eine optimale Schätzdynamik wird erreicht, wenn $m_M$ gleich $m_e$ gewählt wird, da für $m_e > m_M$ die Schätzfehler aufgrund der endlichen Wortbreite $m_M$ die Schätzdynamik begrenzen und auch mit Wortbreiten $m_M > m_e$ keine Erhöhung der Schätzdynamik erreicht werden kann. Um die geforderte Relativdynamik von 40 bis 50 dB bei großem, eingangsseitigem SNR erreichen zu können, muß sowohl die Wortbreite $m_e$ als auch die Wortbreite $m_M$ größer als 8 Bit gewählt werden.

Von der Anmelderin durchgeführte Untersuchungen haben gezeigt, daß im rauschfreien Fall bei Berücksichtigung der im NR-Netz zu erwartenden Dopplerverschiebungen von maximal 2000 Hz und bei geeigneter Wahl der Wortbreiten bei der digitalen Signalverarbeitung bei optimaler erwartungstreuer Kanalschätzung die geforderte Relativdynamik von 40 bis 50 dB erreicht werden kann. Die im realen rauschbehafteten Betrieb der einzelnen Radarstationen in Fig.1 tatsächlich erreichte Relativdynamik ist bei erwartungstreuer Kanalschätzung somit nur noch durch das additive Rauschen am Schätzerausgang bzw. durch den Prozeßgewinn bei der empfängerseitigen Signalverarbeitung bestimmt.

Mit dem vorstehend beschriebenen NR-Netz ist ein Ziel mit einem Radarquerschnitt von 1m$^2$ in einer Entfe-rung von 1000 m bei einer Sendeleitung von 1W detektierbar. Unter Berücksichtigung der Antennengewinne, der Rauschzahl der Empfangsantenne, möglicher atmosphärischer Dämpfungen etc. beträgt bei dem oben beschriebenen Szenario das SNR am Empfängereingang ca. - 25dB. Eine Zieldetektion ist somit nur möglich, falls bei der empfängerseitigen Signalverarbeitung ein Prozeßgewinn p von mindestens 25 dB erreicht wird. Der durch die empfängerseitige Signalverarbeitung erreichbare Prozeßgewinn p ist gemäß

$$p/dB = p_{OS}/dB + p_i/dB \; \overset{!}{\geq} \; 25 \; dB \tag{40}$$

die Summe aus einem Prozeßgewinn $p_{OS}$ des erwartungstreuen Kanalschätzers und einem durch kohärente Pulsin-tegration erzielten Prozeßgewinn $p_i$. Mit den Gln.(27) und (28) und der SNR-Degradation $d_{OS}$ nach Fig.8 ergeben sich für die optimierten Binärcodes der Länge N gleich 16, 32 und 64 die in der nachstehend wiedergegebenen Tabelle 2 aufgelisteten Prozeßgewinne $p_{OS}$.

Tabelle 2

|  | N = 16 | N = 32 | N = 64 |
|---|---|---|---|
| $p_{OS}/dB$ | 11,02 | 14,11 | 15,93 |

Im Hinblick auf einen möglichst geringen Rechenaufwand bei der erwartungstreuen Kanalschätzung ist eine kohärente Integration am Eingang des Kanalschätzers vorteilhaft. Jede Radarstation soll binärphasen-codierte, expandierte Impulse der Dauer $N.T_c$ im zeitlichen Abstand $T_r$ senden, wobei $T_r \gg N \cdot T_c$ gilt.

Der durch kohärente Integration erreichbare Prozeßgewinn $p_i$ ist definiert als das Verhältnis des SNR $\gamma_{aK}$ am Ausgang des Kanalschätzers nach K Integrationsschritten zum SNR $\gamma_{a1}$ am Ausgang des Kanalschätzers ohne kohärente Integration, d.h.

$$p_i/dB = 10 \lg \left( \frac{\gamma_{ak}}{\gamma_{a1}} \right). \tag{41}$$

Bei einem zeitinvarianten Radarkanal wächst somit der Prozeßgewinn $p_i$ nach Gl.(41) gemäß

$$p_i / dB \Big|_{f_d = 0} = 10 \lg K \tag{42}$$

mit zunehmender Anzahl K der Integrationsschritte. Bei einem zeitinvarianten Radarkanal kann somit durch kohärente Integration nach Gl.(42) theoretisch ein beliebig hoher Prozeßgewinn $p_i$ nach Gl.(41) erzielt werden. Bei einem aufgrund bewegter Objekte im Kontrollfeld des NR-Netzes zeitvarianten Radarkanal ist der durch kohärente Integration erreichbare Prozeßgewinn dagegen stets kleiner als der Prozeßgewinn nach Gl.(42), d.h.

$$p_i / dB \Big|_{f_d \neq 0} < 10 \lg K. \tag{43}$$

da aufgrund der nicht verschwindenden Dopplerverschiebungen die Phasen der jeweils aufzuintegrierenden Nutzsignalanteile nicht gleich sind, so daß keine vollständig konstruktive Überlagerung erfolgt.

Von entscheidendem Einfluß auf den durch kohärente Integration maximal erreichbaren Prozeßgewinn $p_{imax}$ ist das Produkt $f_{dmax} \cdot T_r$ aus der maximalen Dopplerverschiebung $f_{dmax}$ und der Pulswiederholdauer $T_r$. Je kleiner $f_{dmax} \cdot T_r$ ist, desto größer ist der Prozeßgewinn $p_{imax}$. Da die maximal zu erwartende Dopplerverschiebung im betrachteten NR-Netz gleich 2000 Hz ist, kommt der Wahl der Pulswiederholdauer $T_r$ eine besondere Bedeutung zu.

Wird $T_r$ klein gewählt, so ist einerseits zwar durch kohärente Integration ein großer Prozeßgewinn $p_i$ erreichbar, andererseits stellt sich aber im Empfänger ein schwerwiegendes Überreichweitenproblem ein. Das Überreichweitenproblem besteht darin, daß während der aktiven Zeitspanne des Empfängers nicht nur Echosignale aufgrund des unmittelbar zuvor gesendeten expandierten Impulses, sondern auch Echosignale von reflektierenden Objekten in Überreichweite aufgrund nicht unmittelbar zuvor gesendeter expandierter Impulse empfangen werden.

Das Überreichweitenproblem wird auf natürliche Weise gelöst, wenn die Pulswiederholdauer $T_r$ so groß gewählt wird, daß auch Echosignale von reflektierenden Objekten in Überreichweite aufgrund eines expandierten Sendeimpulses abgeklungen sind, bevor der nachfolgende expandierte Sendeimpuls gesendet wird. Bei dem NR-Netz sind reflektierende Objekte bis zu einer maximalen Entfernung von 4500m als relevant anzusehen. Ist die Pulswiederholdauer $T_r$ somit mindetens gleich 30µs, so spielt die Überreichweite keine Rolle mehr.

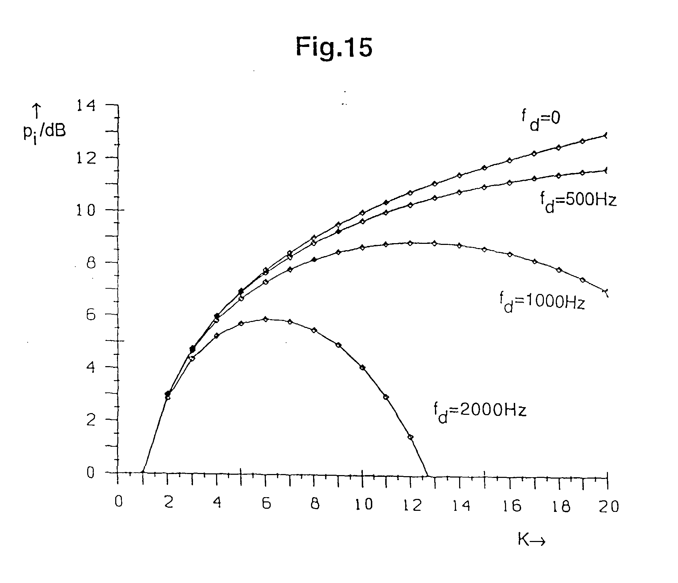

Anhand der Simulationsergebnisse sind in Abhängigkeit von den Parametern $f_d$ und $T_r$ der durch kohärente Integration maximal erreichbare Prozeßgewinn $p_{imax}$ und die Anzahl $K_{opt}$ der zum Erreichen von $p_{imax}$ notwendigen Integrationsschritte bestimmt worden, wobei nur der optimierte Binärcode der Länge N = 32 betrachtet wird. Der Einfluß der Codelänge N auf die in Fig.15 dargestellten Ergebnisse ist jedoch vernachlässigbar klein, da $N \cdot T_c \ll T_r$ ist. In Fig. 15 ist für $T_r$ = 30µs der Prozeßgewinn $p_i$ in Abhängigkeit von der Anzahl K der Integrationsschritte für unterschiedliche Dopplerverschiebungen $f_d$ aufgetragen. Mit kleiner werdender Dopplerverschiebung $f_d$ nimmt jedoch der durch kohärente Integration maximal erreichbare Prozeßgewinn $p_{imax}$ und die Anzahl $K_{opt}$ der zum Erreichen von $P_{imax}$ notwendigen Integrationsschritte zu.

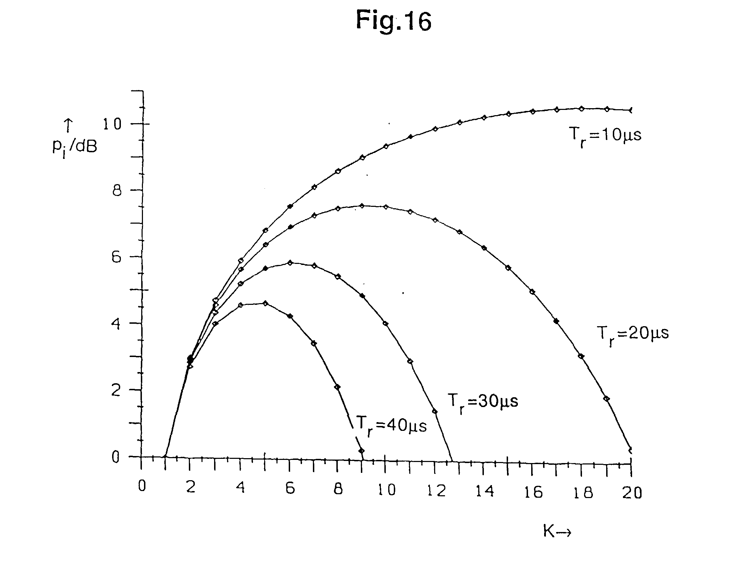

Für unterschiedliche Werte der Pulswiederholfrequenz $T_r$ ist in Fig.16 wiederum der Verlauf des Prozeßgewinnes $p_i$ in Abhängigkeit von der Anzahl der Integrationsschritte K aufgetragen, wobei die Frequenzverschiebung $f_d$ = 2000 Hz gewählt ist. Aus Fig.16 ist zu entnehmen, daß mit abnehmender Pulswiederholdauer $T_r$ der maximal erreichbare Prozeßgewinn $p_{imax}$ ansteigt, wobei jedoch für $T_r$ < 30μs eine Überreichweite im Empfänger auftreten kann.

Der durch kohärente Integration maximal erreichbare Prozeßgewinn $p_{imax}$ und die optimale Anzahl $K_{opt}$ der zum Erreichen von $p_{imax}$ notwendigen Integrationsschritte sind in Tabelle 3 für unterschiedliche Werte der betrachteten Parameter aufgelistet.

Tabelle 3

| $T_r$/μs | $f_d$/Hz | $p_{imax}$/dB | $K_{opt}$ |
|---|---|---|---|
| 30 | 500 | 11,87 | 25 |
| 30 | 1000 | 8,87 | 12 |
| 30 | 2000 | 5,90 | 6 |
| 10 | 2000 | 10,62 | 19 |
| 20 | 2000 | 7,63 | 9 |
| 40 | 2000 | 4,66 | 5 |

Für $T_r$ = 30μs und $f_{dmax}$ = 2000 Hz kann bei Verwenden des optimierten Binärcodes der Länge N = 32 mit Gl. (40) und den in den Tabellen 2 und 3 aufgelisteten Werten, ein resultierender Prozeßgewinn durch die erwartungstreue Kanalschätzung und kohärente Integration von maximal 20,01 dB erreicht werden. Um den geforderten Prozeßgewinn von 25 dB zu erreichen, sind entweder nur Dopplerverschiebungen von maximal 500 Hz zulässig oder die Sendeleistung ist auf 3,15W zu erhöhen.

**Patentansprüche**

1. Verfahren zum aufwandgünstigen Bestimmen der Impulsantwort $\hat{\underline{x}}_{MOS}$ eines hochauflösenden bandbegrenzten Radarkanals in einer mit hinsichtlich der Bandbreite durch Einsatz eines binären Spreizcodes $\underline{c}$ der Länge N und der Chipdauer $T_c$ expandierten Sendeimpulses $\underline{a}(t)$ arbeitenden Radarstation aus einem Empfangssignal $\underline{e}$, dem ein korreliertes oder unkorreliertes additives Störsignal $\underline{n}$ überlagert sein kann, unter Nutzung der Kenntnis über den Spreizcode $\underline{c}$ und unter Verwendung eines Kanalschätzers, mit welchem in einem M interessierende Entfernungstorbereiche überdeckenden Zeitbereich eine sogenannte lineare erwartungstreue Optimalschätzung der Radarkanal-Impulsantwort $\hat{\underline{x}}_{MOS}$ durchgeführt wird, **dadurch gekennzeichnet,** daß die im Kanalschätzer ausgeführte lineare erwartungstreue Optimalschätzung derart modifiziert wird, daß die Impulsantwort $\underline{x}_{MOS}$ des bandbegrenzten Radarkanals nach dem Grundprinzip einer Multiplikation des abgetasteten Empfangssignals $\underline{e}$ mit einer inversen Schätzmatrix $\underline{A}_E^{-1}$ bestimmt wird, wobei die Matrix $\underline{A}_E$ durch Erweiterung der aus den Komponenten $\underline{c}_i$ des Spreizcodes c dargestellten Rechteckmatrix zu einer rechtszirkulanten quadratischen Matrix gebildet wird, d.h. es gilt für einen Radarkanal die modifizierte erwartungstreue Optimalschätzung:

$$\hat{\underline{x}}_{MOS} = \underline{A}_E^{-1} \underline{e}.$$

2. Verfahren nach Anspruch 1, **dadurch gekennzeichnet,** daß im Kanalschätzer die modifizierte erwartungstreue Optimalschätzung der Radarimpulsantwort in einem zyklischen digitalen Korrelator als zyklische Korrelation des Empfangssignals $\underline{e}$ mit den Elementen $W_{1,i}$, mit i=1...M+N-1, in der ersten Zeile der inversen Schätzmatrix $\underline{A}_E^{-1}$ ausgeführt wird, wobei die (M+N-1) Filter-Koeffizienten $\underline{t}_i=W_{1,i}$ des zyklischen digitalen Korrelators sowohl vom expandierten Sendeimpulsspreizcode $\underline{c}$ als auch von der Anzahl M der interessierenden Entfernungstore abhängig sind und somit außer der Kenntnis über den Spreizcode $\underline{c}$ auch noch das a-priori-Wissen über die Anzahl der interessierenden Entfernungstore und damit die maximal in Betracht zu ziehende Reichweite des Radarsystems ausgenutzt wird (Fig. 5).

3. Verfahren nach Anspruch 1, **dadurch gekennzeichnet,** daß im Kanalschätzer die modifizierte erwartungstreue Optimalschätzung der Radarimpulsantworten in drei Schritten vorgenommen wird, nämlich erstens durch die Berechnung des diskreten Fourierspektrums des Empfangssignals $\underline{e}$, zweitens durch eine Division der diskreten

Spektralwerte des Empfangssignals $\underline{\mathbf{e}}$ durch die diskreten Spektralwerte des durch eine Kalibriermessung gewonnenen, effektiven Sendesignals und schließlich drittens durch eine Ermittlung des modifizierten erwartungstreuen Schätzwertes $\hat{\underline{x}}_{MOS}$ mittels einer inversen diskreten Fourier-Transformation des Schätzwertes, der bei der im zweiten Schritt durchgeführten Division gewonnen wurde.

4.  Verfahren nach Anspruch 3, **dadurch gekennzeichnet,** daß im Kanalschätzer die modifizierte erwartungstreue Optimalschätzung der Radarimpulsantwort in den im folgenden im einzelnen beschriebenen drei Schritten vorgenommen wird, nämlich im ersten Schritt durch die Bildung der diskreten Fourier-Transformation $\underline{\mathbf{T}}_{DFT}\,\underline{\mathbf{e}}$ des Empfangssignals $\underline{\mathbf{e}}$, im zweiten Schritt durch die eigentliche Kanalschätzung, wobei mit dem Empfangssignal $\underline{\mathbf{e}}$ und der Diagonalmatrix $\underline{\Lambda}$ die erwartungstreue Optimalschätzung

$$\underline{\Lambda}^{-1}\,\underline{T}_{DFT}\,\underline{e} = \underline{T}_{DFT}\,\underline{x}_{E} + \underline{\Lambda}^{-1}\,\underline{T}_{DFT}\,\underline{n}$$

der diskreten Fourier-Transformierten $\underline{\mathbf{T}}_{DFT}\,\underline{\mathbf{x}}_{E}$ der erweiterten Kanalimpulsantwort

$$\underline{\mathbf{x}}_{E} = (\underbrace{\underline{x}_{1},\underline{x}_{2}\ldots\underline{x}_{M}}_{\underline{x}},\underbrace{0\ldots0}_{N-1\ \text{Nullen}})^{T}$$

bestimmt wird, indem die i-te Komponente des Vektors $\underline{\mathbf{T}}_{DFT}\,\underline{\mathbf{e}}$ durch die i-te Komponente $\lambda_i$ der diskreten Fourier-Transformierten

$$\underline{\lambda} = \underline{T}_{DFT}(\underline{c}_{1},\underline{c}_{2}\ldots\underline{c}_{N},0\ldots0)^{T} = \underline{T}_{DFT}\,\underline{c}_{E}$$

des erweiterten expandierten Sendeimpulses $\underline{\mathbf{c}}_{E}$ dividiert wird, wobei gilt:

$$\underline{\Lambda} = \text{diag}(\underline{\lambda}_{1},\underline{\lambda}_{2}\ldots\lambda_{M+N-1}) = \text{diag}(\underline{\lambda}_{i}),\ i=1,2\ldots M+N-1,$$

und im dritten Schritt durch die inverse diskrete Fourier-Transformation $\underline{\mathbf{T}}_{DFT}$ der Schätzung

$$\underline{\Lambda}^{-1}\,\underline{T}_{DFT}\,\underline{e} = \underline{T}_{DFT}\,\underline{x}_{E} + \underline{\Lambda}^{-1}\,\underline{T}_{DFT}\,\underline{n},$$

so daß sich nach Durchführung dieser drei Schritte die modifizierte erwartungstreue Optimalschätzung $\hat{\underline{x}}_{MOS}$ der erweiterten Kanalimpulsantwort $\underline{\mathbf{x}}_{E}$ in Form von

$$\hat{\underline{x}}_{MOS} = \underline{A}_{E}^{-1}\underline{e} = \underline{T}_{DFT}^{-1}\,\underline{\Lambda}^{-1}\,\underline{T}_{DFT}\,\underline{e}$$

ergibt.

5.  Verfahren nach einem der vorhergehenden Ansprüche, **gekennzeichnet durch** die Verwendung in Radarstationen eines modular aufgebauten Nahbereichs-Radar(NR)-Netzes, beispielsweise für ein Flughafen-Überwachungsradarsystem.

6.  Verfahren nach einem der vorhergehenden Ansprüche, **gekennzeichnet durch** die Anwendung von STC (Sensitivity-Time-Control = Empfindlichkeit-Zeit-Steuerung) in den Radarstationen, wobei im Empfänger eine Verstärkereinheit mit zeitlich durch eine Steuerspannung veränderbarer Verstärkung vorgesehen ist, derart, daß die hinsichtlich ihres zeitlichen Verlaufs abgespeicherte Steuerspannung so gewählt ist, daß der Einfluß der Funkfelddämpfung kompensiert wird und das analoge Empfangssignal $\underline{e}(t)$ in Abhängigkeit von der gespeicherten Steuerspannung auf ein kompensiertes analoges Empfangssignal $\underline{e}_k(t)$ verstärkt wird.

7.  Verfahren nach Anspruch 6, **dadurch gekennzeichnet,** daß die der STC-Verstärkungsregelung unterworfenen

analogen Empfangssignale $\underline{e}_k(t)$ nach ihrer Digitalisierung als digitale Empfangssignale $\underline{e}_k$ einer Kompensations-einrichtung (29) zugeführt werden, in welcher der Einfluß der vorangegangenen STC-Verstärkung wieder kompensiert wird.

8. Verfahren nach einem der vorhergehenden Ansprüche, **gekennzeichnet durch** die Verwendung eines Binär-Codes für den Spreizcode und infolge davon einer entsprechend binärcodierten Phasensprungmodulation der Sendeimpulse.

9. Verfahren nach Anspruch 8, **dadurch gekennzeichnet,** daß ein Spreizcode **c** ausgewählt wird, der einen annähernd konstanten Verlauf des Betrags $|\underline{A}(f)|$ des Spektrums nach der Gleichung

$$\underline{A}(f) = \sum_{i=1}^{N} \underline{c}_i \exp(-j2\pi f T_c [i-1])$$

ergibt,damit die Degradation des Signal-Stör-Verhältnisses möglicht gering ist.

10. Verfahren nach einem der vorhergehenden Ansprüche, **dadurch gekennzeichnet,** daß im Empfänger der Radarstationen die Quadraturkomponenten $e_I(t)$ und $e_Q(t)$ des analogen Empfangssignal $\underline{e}(t)$ gebildet werden und mit der Abtastfrequenz $f_C=1/T_C$ des Spreizcodes abgetastet werden und danach die Abtastwerte $\underline{e}_i$ des Empfangssignals $\underline{e}(t)$ einer Quantisierung

$$Q(\underline{e}_i) = \underline{w}_i = w_{Ii} + w_{Qi}, \ i=1...M+N-1$$

unterzogen werden.

11. Verfahren nach einem der vorhergehenden Ansprüche, **dadurch gekennzeichnet,** daß zur Kanalschätzung als digitale Recheneinheit ein Mikroprozessor oder ein digitaler Signalprozessor (DSP) eingesetzt werden, deren interne Wortbreiten deutlich größer als die Wortbreiten $m_e$ bzw. $m_M$ sind ($m_e$/bit = Quantisierungswortbreite der Abtastwerte des Empfangssignals; $m_M$/bit = endliche Wortbreite der Elemente der Schätzmatrix).

12. Verfahren nach einem der vorhergehenden Ansprüche, **dadurch gekennzeichnet,** daß ein optimaler Wert eines durch kohärente Integration erreichbaren Prozeßgewinns durch das Produkt $f_{dmax} \cdot T_r$ aus der maximalen Dopplerverschiebung $f_{dmax}$ und der Pulswiederholfrequenz $T_r$ festgelegt ist.

**Claims**

1. A method for cost-effectively determining the pulse response $\hat{\underline{X}}_{MOS}$ of a high-resolution, band-limited radar channel in a radar station working with a transmitted pulse $\underline{a}(t)$ expanded as regards the bandwidth by application of a binary spread code $\underline{c}$ of the length N and chip duration $T_c$ from a received signal $\underline{e}$ which may be superimposed by a correlated or non-correlated additive interference signal $\underline{n}$, in making use of the knowledge as to the spread code $\underline{c}$ and in utilizing a channel estimator with which in a time range covering M range gates of interest a so-called linear unbiased optimum estimate of the radar channel pulse response $\hat{\underline{X}}_{MOS}$ is implemented, characterized in that the linear unbiased optimum estimate performed in the channel estimator is modified such that the pulse response $\hat{\underline{X}}_{MOS}$ of the band-limited radar channel is determined in accordance with the basic principle of multiplying the sampled received signal $\underline{e}$ with an inverse estimation matrix $\underline{A}_E^{-1}$, the matrix $\underline{A}_E$ being formed by expanding the rectangular matrix represented by the components $\underline{c}_i$ of the spread code $\underline{c}$ into a right-circulating quadratic matrix, i.e.

$$\hat{\underline{X}}_{MOS} = \underline{A}_E^{-1} \underline{e}$$

being the modified unbiased optimum estimate for a radar channel.

2. The method as set forth in claim 1, characterized in that in the channel estimator the modified unbiased optimum estimate of the radar pulse response is implemented in a cyclic digital correlator as a cyclic correlation of the received signal $\underline{e}$ with the elements $W_{1,i}$ where $i = 1...M+N-1$ in the first line of the inverse estimation matrix $\underline{A}_E^{-1}$, where the (M+N-1) filter coefficients $\underline{t}_i=W_{1,i}$ of the cyclic digital correlator depend on both the expanded transmitted pulse spread code $\underline{c}$ and on the number M of range gates of interest and thus making use not only of the knowledge of the spread code $\underline{c}$ but also of the a priori knowledge of the number of range gates of interest and in thus exploiting the range of the radar system to be taken into account as a maximum (Fig.5).

**3.** The method as set forth in claim 1, characterized in that in the channel estimator the modified unbiased optimum estimate of the radar pulse responses is performed in three steps, namely firstly by computing the discrete Fourier spectrum of the received signal $\underline{e}$, secondly by dividing the discrete spectral values of the received signal $\underline{e}$ by the discrete spectral values of the effective transmitted signal obtained by a calibration measurement and, in conclusion, thirdly by establishing the modified unbiased estimate $\underline{X}_{MOS}$ by means of an inverse discrete Fourier transformation of the estimate obtained from the division in the second step.

**4.** The method as set forth in claim 3, characterized in that in the channel estimator the modified unbiased optimum estimate of the radar pulse response is performed in three steps as detailed in the following, namely in the first step by forming the discrete Fourier transformation $\underline{T}_{DFT}\,\underline{e}$ of the received signal $\underline{e}$, in the second step by the actual channel estimate, whereby with the received signal $\underline{e}$ and the diagonal matrix $\Delta$ the unbiased optimum estimate

$$\Delta^{-1}\,\underline{T}_{DFT}\,\underline{e} = \underline{T}_{DFT}\,\underline{x}_E + \Delta^{-1}\,\underline{T}_{DFT}\,\underline{n}$$

of the discrete Fourier transformation $\underline{T}_{DFT}\,\underline{x}_E$ of the expanded channel pulse response

$$\underline{x}_E = \underbrace{(\underline{x}_1,\ \underline{x}_2,....\underline{x}_M,}_{x}\underbrace{0...0)}_{N-1\ \text{zeroes}}{}^{T}$$

is determined by dividing the $i^{th}$ component of the vector $\underline{T}_{DFT}\,\underline{e}$ by the $i^{th}$ component $\lambda_i$ of the discrete Fourier transformation

$$\lambda = \underline{T}_{DFT}\,(\underline{c}_1,\,\underline{c}_2....\underline{c}_N,0...0)^{T} = \underline{T}_{DFT}\,\underline{c}_E$$

of the expanded transmitted pulse $\underline{c}_E$, where

$$\Delta = \text{diag}(\lambda_1,\,\lambda_2,...\,\lambda_{M+N-1}) = \text{diag}(\lambda_i),\ i=1,\,2,...\,M+N-1,$$

and in the third step by the inverse discrete Fourier transformation $\underline{T}_{DFT}$ of the estimate

$$\Delta^{-1}\,\underline{T}_{DFT}\,\underline{e} = \underline{T}_{DFT}\,\underline{x}_E + \Delta^{-1}\,\underline{T}_{DFT}\,\underline{n}$$

so that after implementation of the three steps the modified unbiased optimum estimate $\underline{\hat{X}}_{MOS}$ of the expanded channel pulse response $\underline{x}_E$ is given by

$$\underline{\hat{X}}_{MOS} = \underline{A}_E^{-1}\,\underline{e} = \underline{T}_{DFT}^{-1}\,\Delta^{-1}\,\underline{T}_{DFT}\,\underline{e}$$

**5.** The method as set forth in any of the preceding claims, characterized by its use in radar stations of a modular near-range (NR) radar network, for example for an airport surveillance radar system.

**6.** The method as set forth in any of the preceding claims characterized by application of sensitivity time control (STC) in the radar stations, the receiver of which is provided with an amplifier unit having a gain variable in time by a control voltage, such that the control voltage memorized as regards its time profile is selected so that the influence of the radio field damping is compensated and the analog received signal $\underline{e}$(t) is amplified as a function of the memorized control voltage into a compensated analog received signal $\underline{e}_k$(t).

7. The method as set forth in claim 6, characterized in that the analog received signals $\underline{e}_k$(t) subjected to the STC gain control are digitized before being applied as digital received signals $\underline{e}_k$ to a compensation device (29) in which the influence of the previous STC amplification is recompensated.

8. The method as set forth in any of the preceding claims, including use of a binary code for the spread code and, consequently, a corresponding binary-coded phase shift keying modulation of the transmitted pulses.

9. The method as set forth in claim 8, including a step of selecting a spread code c to achieve a virtually constant profile of the magnitude [$\underline{A}$(f)] of the spectrum given by the equation

$$\underline{A}(f) = \sum_{i-1}^{N} \underline{c}_i \exp(-j2\pi f T_c[i-1])$$

so that degradation of the signal-to-noise ratio is a minimum.

10. The method as set forth in any of the preceding claims, characterized in that in the receiver of the radar stations the quadrature components $e_I$(t) and $e_Q$(t) of the analog received signal $\underline{e}$(t) are formed and sampled at the sampling frequency $f_C = 1/T_C$ of the spread code, quantization of the samples $\underline{e}_i$ of the received signal then being done as per

$$Q(\underline{e}_i) = \underline{w}_i = w_{Ii} + w_{Qi}, \, i=1.....M+N-1$$

11. The method as set forth in any of the preceding claims, characterized in that for channel estimation a microprocessor or a digitial signal processor (DSP) is employed as the digital arithmetic unit, the internal word lengths of which are significantly longer than the word lengths $m_e$ or $m_M$ ($m_e$/bit = quantization word length of the sampled values of the received signal; $m_M$/bit = finite word length of the elements of the estimation matrix).

12. The method as set forth in any of the preceding claims, characterized in that an optimum value of a process gain achievable by coherent integration is defined by the product $f_{dmax}T_r$, where $f_{dmax}$ is the maximum Doppler shift and $T_r$ the pulse repetition period.

**Revendications**

1. Procédé pour déterminer, d'une manière avantageuse du point de vue dépense, la réponse impulsionnelle $\hat{\underline{x}}_{MOS}$ d'un canal radar à bande limitée à haute résolution dans une station radar travaillant en rapport avec la largeur de bande, en utilisant un code d'étalement binaire c ayant une longueur N et une durée de modulation $T_c$ d'une impulsion d'émission dilatée $\underline{a}$(t), à partir d'un signal de réception $\underline{e}$, auquel peut être superposé un signal parasite additif $\underline{n}$ corrélé ou non corrélé, moyennant l'utilisation de la connaissance du code d'étalement $\underline{c}$ et moyennant l'utilisation d'un estimateur de canal, avec lequel ce qu'on appelle une estimation optimale linéaire sans biais de la réponse impulsionnelle $\underline{x}_{MOS}$ du canal radar est exécutée dans une plage temporelle qui englobe M gammes intéressantes de portes de distances, caractérisé en ce que l'estimation optimale linéaire sans biais exécutée dans l'estimateur de canal est modifiée de telle sorte que la réponse impulsionnelle $\underline{x}_{MOS}$ du canal radar à bande limitée est determinée selon le principe de base d'une multiplication du signal de réception échantillonné e par une matrice d'estimation inverse $\underline{A}_E^{-1}$, la matrice $\underline{A}_E$ étant formée par extension de la matrice rectangulaire, représentée par les composants $\underline{c}_i$ du code d'étalement $\underline{c}$ en une matrice quadratique circulante à droite, c'est-à-dire que l'on a pour un canal radar l'estimation optimale sans biais modifiée :

$$\hat{\underline{x}}_{MOS} = \underline{A}_E^{-1} \underline{e}.$$

2. Procédé selon la revendication 1, caractérisé en ce que l'estimation optimale modifiée sans biais de la réponse impulsionnelle du radar est exécutée, dans l'estimateur de canal, dans un corrélateur numérique cyclique sous la forme d'une corrélation cyclique du signal de reception $\underline{e}$ avec les éléments $W_{1,i}$, avec i=1...M+N-1, sur la première ligne de la matrice d'estimation inverse $\underline{A}_E^{-1}$, et selon lequel les (M+N-1) coefficients de filtre $\underline{t}_i=W_{1,i}$ du corrélateur numérique cyclique dépendent aussi bien du code étendu d'étalement d'impulsions d'émission $\underline{t}$ que du nombre M des portes de distances intéressantes, et par conséquent, en dehors de la connaissance du code d'étalement $\underline{c}$, également la connaissance a priori du nombre des portes de distances intéressantes et par conséquent la portée maximale devant être considérée du système radar sont utilisées (figure 5).

3. Procédé selon la revendication 1, caractérisé en ce que dans l'estimateur de canal, l'estimation optimale sans biais modifiée des réponses impulsionnelles du radar sont exécutées en trois étapes, à savoir tout d'abord au moyen du calcul du spectre discret de Fourier du signal de réception $\underline{e}$, en second lieu au moyen d'une division des valeurs spectrales discrètes du signal de réception $\underline{e}$ par les valeurs spectrales discrètes du signal d'émission effectif obtenu au moyen d'une mesure de calibrage, et enfin en troisième lieu au moyen d'une détermination de la valeur estimée sans biais modifiée $\hat{\underline{x}}_{MOS}$, à l'aide d'une transformation de Fourier discrète inverse de la valeur estimée, qui a été obtenue lors de la division exécutée lors de la deuxième étape.

4. Procédé selon la revendication 3, caractérisé en ce que dans l'estimateur de canal, l'estimation optimale sans biais modifiée de la réponse impulsionnelle du radar est réalisée dans les trois étapes décrites ci-après de façon détaillée, à savoir lors de la première étape, au moyen de la formation de la transformation de Fourier discrète $\underline{T}_{DFT}\,\underline{e}$ du signal de réception $\underline{e}$, dans la seconde étape au moyen de l'estimation proprement dite du canal, auquel cas l'estimation optimale sans biais

$$\Delta^{-1}\,\underline{T}_{DFT}\,\underline{e} = \underline{T}_{DFT}\,\underline{x}_E + \Delta^{-1}\,\underline{T}_{DFT}\,\underline{n}$$

de la transformée de Fourier discrète $\underline{T}_{DFT}\,\underline{x}_E$ de la réponse impulsionnelle étendue du canal

$$\underline{x}_E = \underbrace{(\underline{x}_1,\underline{x}_2\ldots\underline{x}_M,}_{\underline{x}}\ \underbrace{0\ldots0)^T}_{N-1\ \text{zéro}}$$

est déterminée avec le signal de réception $\underline{e}$ et la matrice diagonale $\Delta$, par le fait que la i-ème composante du vecteur $\underline{T}_{DFT}\,\underline{e}$ est divisée par la i-ème composante $\lambda_i$ de la transformée de Fourier discrète

$$\underline{\lambda} = \underline{T}_{DFT}\,(\underline{c}_1,\underline{c}_2\ldots\underline{c}_N,0\ldots0)^T = \underline{T}_{DFT}\,\underline{c}_E$$

de l'impulsion d'émission étendue élargie $\underline{c}_E$, avec

$$\Delta = \operatorname{diag}(\underline{\lambda}_1,\underline{\lambda}_2\ldots\lambda_{M+1-1}) = \operatorname{diag}(\underline{\lambda}_i),\ i=1,2\ldots M+N-1,$$

et lors de la troisième étape, au moyen de la transformation de Fourier discrète inverse $\underline{T}_{DFT}$ de l'estimation

$$\Delta^{-1}\,\underline{T}_{DFT}\,\underline{e} = \underline{T}_{DFT}\,\underline{x}_E + \Delta^{-1}\,\underline{T}_{DFT}\,\underline{n},$$

de sorte qu'après l'exécution de ces trois étapes, on obtient l'estimation optimale sans biais modifiée $\hat{\underline{x}}_{MOS}$ de la réponse impulsionnelle étendue de canal $\underline{x}_E$ sous la forme

$$\hat{\underline{x}}_{MOS} = \underline{A}_E^{-1} = \underline{T}_{DFT}^{-1}\,\Delta^{-1}\,\underline{T}_{DFT}\,\underline{e}.$$

5. Procédé selon l'une des revendications précédentes, caractérisé par l'utilisation, dans des stations de radar, d'un réseau radar de proximité (NR) agencé de façon modulaire, par exemple pour un système radar de contrôle d'aéroport.

**6.** Procédé selon l'une des revendications précédentes, caractérisé par l'utilisation d'une commande STC (Sensitivity-Time-Control = commande sensibilité-temps) dans les stations de radar, et selon lequel dans le récepteur il est prévu une unité d'amplificateur possédant une amplification pouvant être modifiée dans le temps au moyen d'une tension de commande, de telle sorte que la tension de commande, dont la variation dans le temps est mémorisée, est choisie de telle sorte que l'influence de l'affaiblissement du champ radio est compensée et que le signal de reception analogique $\underline{e}(t)$ est amplifié, en fonction de la tension de commande mémorisée, pour former un signal de reception analogue compensé $\underline{e}_k(t)$.

**7.** Procédé selon la revendication 6, caractérisé en ce que les signaux de réception analogiques $\underline{e}_k(t)$ qui sont soumis à la régulation d'amplification selon la commande STC, sont envoyés, après leur numérisation sous la forme de signaux de réception numériques $\underline{e}_k$, à un dispositif de compensation (29), dans lequel l'influence de l'amplification précédente au moyen de la commande STC est à nouveau compensée.

**8.** Procédé selon l'une des revendications précédentes, caractérisé par l'utilisation d'un code binaire pour le code d'étalement et, en conséquence de cela, d'une modulation à saut de phase codée en binaire correspondante des impulsions d'émission.

**9.** Procédé selon la revendication 8, caractérisé en ce qu'on choisit un code d'étalement c, qui fournit une allure approximativement constante de la valeur absolue $|\underline{A}(f)|$ du spectre conformément à la relation

$$\underline{A}(f) = \sum_{i=1}^{N} \underline{c}_i \cdot \exp(-j2\pi f T_c[i-1])$$

afin que l'altération du rapport signal/bruit soit aussi faible que possible.

**10.** Procédé selon l'une de revendications précédentes, caractérisé en ce que les composantes en quadrature $e_I(t)$ et $e_Q(t)$ du signal de réception analogique $\underline{e}(t)$ sont formées dans le récepteur des stations de radar et sont échantillonnées avec la fréquence d'échantillonnage $f_C = 1/T_C$ du code d'étalement et ensuite les valeurs d'échantillonnage $\underline{e}_i$ du signal de réception $\underline{e}(t)$ sont soumises à une quantification

$$Q(\underline{e}_i) = \underline{w}_i = w_{Ii} + w_{Qi}, \quad i = 1...M+N-1$$

**11.** Procédé selon l'une des revendications précédentes, caractérisé en ce que pour l'estimation de canal, on utilise comme unité de calcul numérique un microprocesseur, ou un processeur de signaux numériques (DSP), dont les largeurs internes de mots sont nettement supérieures aux largeurs de mots $m_e$ ou $m_M$ ($m_M$/bit = largeur de mot de quantification des valeurs d'échantillonnage des signaux de réception ; $m_M$/bit = largeur de mot finale des éléments de la matrice d'estimation.

**12.** Procédé selon l'une des revendications précédentes, caractérisé en ce qu'une valeur optimale d'un gain de processus pouvant être obtenue au moyen d'une intégration cohérente, est déterminée par le produit $f_{dmax} \cdot T_r$ du décalage Doppler maximum $f_{dmax}$ par la fréquence de récurrence d'impulsions $T_r$.

# Fig.1

# Fig.2

meßbare
Kanalimpulsantwort
$\underline{x}(\tau) = \underline{h}_s(\tau) \cdot \underline{h}(\tau) \cdot \underline{h}_e(\tau)$

# Fig.3

## Fig.4

$\underline{e}$

$T_c$  $T_c$  · · ·  $T_c$

$\underline{w}_1(k)$  $\underline{w}_2(k)$  · · ·  $\underline{w}_{R-1}(k)$  $\underline{w}_R(k)$

$\Sigma$  · · ·  $\hat{\underline{x}} = \underline{S}\,\underline{e}$

| | $\underline{w}_1(k)$ | $\underline{w}_2(k)$ · · · | $\underline{w}_M(k)$ · · · | $\underline{w}_{M+N-1}(k)$ | $\underline{w}_{M+N}(k)$ | $\underline{w}_{M+N+1}(k)$ · · · | $\underline{w}_{2M+N-1}(k)$ |
|---|---|---|---|---|---|---|---|
| k=1 | $\underline{S}_{1,1}$ | $\underline{S}_{1,2}$ · · · | $\underline{S}_{1,M}$ · · · | $\underline{S}_{1,M+N-1}$ | 0 | 0 | · · · 0 |
| k=2 | 0 | $\underline{S}_{2,1}$ · · · | $\underline{S}_{2,M-1}$ · · · | $\underline{S}_{2,M+N-2}$ | $\underline{S}_{2,M+N-1}$ | 0 | · · · 0 |
| · · · | | | | | | | |
| k=M | 0 | 0 | · · · $\underline{S}_{M,1}$ · · · | $\underline{S}_{M,N}$ | $\underline{S}_{M,N+1}$ | $\underline{S}_{M,N+2}$ · · · | $\underline{S}_{M,M+N-1}$ |

## Fig.5

$\underline{e}_1$  $\underline{e}_2$  $\underline{e}_3$  · · ·  $\underline{e}_{M+N-2}$  $\underline{e}_{M+N-1}$

$\underline{t}_1$  $\underline{t}_2$  $\underline{t}_3$  · · ·  $\underline{t}_{M+N-2}$  $\underline{t}_{M+N-1}$

$\Sigma$  · · ·  $\hat{\underline{x}}_{MOS}$

# Fig.6

# Fig.7

a)

b)

## Fig.8

a)

Codelänge : N = 16

Gütemaße : $d_{OS}$ = 1,02 dB

$d_{MOS}$ = 1,04 dB

PSR = 18,10 dB

Hex-Darstellung :

2 8 3 3

b)

Codelänge : N = 32

Gütemaße : $d_{OS}$ = 0,94 dB

$d_{MOS}$ = 0,96 dB

PSR = 18,06 dB

Hex-Darstellung :

0 0 F 2 D 5 6 6

c)

Codelänge : N = 64

Gütemaße : $d_{OS}$ = 2,13 dB

$d_{MOS}$ = 2,22 dB

PSR = 18,06 dB

Hex-Darstellung :

4 8 4 3 B A B 4 E F 8 6 D E 4 B

Umwandlung Hexadezimal- → Binär-Darstellung, z.B.:

| N = 16 | 2 | 8 | 3 | 3 |
|---|---|---|---|---|
| | 0010 | 1000 | 0011 | 0011 |
| Binärcode: | - - + - | + - - - | - - + + | - - + + |

# Fig.9

20

Regelspannung k(t) — digitaler Speicher — 23

$\underline{e}(t)$ → STC (21) → $\underline{e}_k(t)$ → $f_c$ (22) → $\underline{e}_k$ → Kompensation (24) → $\underline{e}$ → Kanal-schätzung (25) →

$k_l$

**EP 0 802 427 B1**

# Fig.10

a)

b)

c)

30

# Fig.11

# Fig.12

## Fig.13

# Fig.14

a)

N = 16

X $m_e$ = 6 bit
◐ $m_e$ = 8 bit
△ $m_e$ = 10 bit
◇ $m_e$ = 12 bit

b)

N = 32

X $m_e$ = 6 bit
◐ $m_e$ = 8 bit
△ $m_e$ = 10 bit
◇ $m_e$ = 12 bit

c)

N = 64

X $m_e$ = 6 bit
◐ $m_e$ = 8 bit
△ $m_e$ = 10 bit
◇ $m_e$ = 12 bit

## Fig.15

## Fig.16